# EUROPEAN PATENT SPECIFICATION

(11) **EP 2 028 238 B1**
(45) Date of publication and mention of the grant of the patent: **01.10.2014**
(21) Application number: 08013859.7
(22) Date of filing: 01.08.2008
(51) Int. Cl.: C09D 11/00

(54) **Water-based ink composition, ink set and image recording method**
Tintenzusammensetzung auf Wasserbasis, Tintensatz und Bildaufzeichnungsverfahren
Composition d'encre à base aqueuse, ensemble d'encre et procédé d'impression d'images

(30) Priority: 09.08.2007 JP 2007207712
(43) Date of publication of application: 25.02.2009
(73) Proprietor: FUJIFILM Corporation, Tokyo 106-0031 (JP)
(72) Inventor: Ishizuka, Takahiro, Minami-Ashigara-shi Kanagawa (JP); Tamura, Akio, Minami-Ashigara-shi Kanagawa (JP); Yanagi, Terukazu, Minami-Ashigara-shi Kanagawa (JP)
(74) Representative: HOFFMANN EITLE

(56) References cited:
- EP-A- 1 364 997
- EP-A- 1 394 207
- EP-A- 1 679 351
- EP-A- 1 811 002
- WO-A-2006/038726
- WO-A1-2004/080723
- US-A- 5 736 606
- US-A1- 2004 039 081
- DATABASE WPI Week 199806 Thomson Scientific, London, GB; AN 1998-059194 XP002502418 & JP 09 302007 A (NIPPON GOSEI GOMU KK) 25 November 1997 (1997-11-25)

## Description

### BACKGROUND OF THE INVENTION

### Technical Field

The present invention relates to an ink set comprising a water-based ink composition and an image recording method. In particular, it relates to a technique for speeding up the aggregation reaction rate of a water-based ink composition.

### Description of the Related Art

An inkjet-recording method performs recording by respectively ejecting ink droplets from many nozzles formed on an inkjet head, and is widely used for the reasons that noise at the time of a recording operation is low, running costs are inexpensive and a high definition image can be recorded on a large variety of recording media.

Among inkjet-recording methods, a method of ejecting ink droplets onto an intermediate transfer body from an ink head to first form an image on the intermediate transfer body, and then transferring the image to a recording medium, is known. According to this transfer-type recording method, it is possible to remove an ink solvent (for example, water) from the intermediate transfer body using means such as a solvent removal roller, and then transfer the image onto the recording medium. Therefore, since the problems of image bleeding caused by an ink solvent, strike-through, distortion of a recording medium (cockling), and the like do not occur, a high quality image can be obtained.
Furthermore, a two-component reaction method of reacting two components of an ink with a treating liquid that aggregates the ink, thereby accelerating fixation of the ink, is known as an inkjet-recording method.

When the two-component reaction method is applied to a transfer-type inkjet recording method, it is necessary to shorten the time required between contacting the ink with a treating liquid on an intermediate transfer body and aggregation of the ink, in order to reduce apparatus size. Namely, a solvent in an aggregate formed by contacting the ink and the treating liquid is removed by conveying the aggregate to a solvent removal roller. However, when the aggregation reaction rate is slow, it is necessary to ensure a long distance between the droplet ejection nozzles and the solvent removal roller, which increases apparatus size.

A method including a step of mixing, on a transfer body, a recording liquid containing at least a colorant and a treating liquid containing a reactive component which reacts with at least one other reactive component of the recording liquid, and a step of transferring the resultant mixture to a material for recording is known as a conventional technique in which the two-component reaction method is applied to an inkjet-recording method (see, for example, JP-A No. 2003-82265). Furthermore, use of a recording liquid containing a resin emulsion having ionic groups on at least the resin particle surface as the reactive component in the recording liquid that reacts with reactive components in the treating liquid is known. It is reported that according to this recording method, even in the case of rapid recording, image bleeding is not generated on a transfer body, and high transferability is obtained.

A resin emulsion in which dispersion state is destroyed by an external factor is known (see, for example, JP-A No. 9-302007). JP-A No. 9-302007 describes a rubbery polymer latex having a glass transition point of 10°C or lower and a gel content of from 20 to 100% by weight obtained by emulsion polymerizing in the presence of a carboxylate type reactive emulsifier. It is described that the rubbery polymer latex shows excellent coagulation property when added to sulfuric acid or an aqueous solution of calcium chloride.

WO-A-2004/080723 teaches an ink set comprising: a treating liquid composition comprising fine particles being so configured that their dispersion is one of kept and broken by an external factor; and a recording liquid composition comprising a colorant being so configured that one of dispersion of the colorant and dissolution of the colorant is one of kept and broken by the external factor, wherein the fine particles and the colorant aggregate separately on a recording medium as a result of the break of the dispersion of the treating liquid composition and at least one of the dispersion of the recording liquid composition and dissolution of the recording liquid composition, without the colorant being substantially mixed with the fine particles, to thereby form an image.

US-A-2004/0039081 teaches a color ink set comprising a black ink and a color ink which is different from the black ink, wherein: the black ink contains a black pigment, resin particles having carboxyl group, a first pH-adjusting agent, a water-soluble organic solvent, and water; the color ink contains a coloring pigment, resin particles, a second pH-adjusting agent, a water-soluble organic solvent, and water; and pH of the black ink is not less than 7.8, and pH of the color ink is not more than 4.5.

### SUMMARY OF THE INVENTION

According to a first aspect, the present invention provides an image recording method comprising the steps of:
applying a water-based ink composition comprising water-insoluble colored particles (A), water-insoluble particles (B) comprising a water-insoluble polymer and an emulsifier containing a carboxylate group, and a pH regulator (C) in an amount such that the water-based ink composition has a pH of from 6 to 10 onto the recording medium to which the treating liquid has been applied, the treating liquid changing the pH of the water-based ink composition causing the water-insoluble colored particles (A) and the water-insoluble particles (B) to aggregate to form an image on the recording medium,
wherein the water-insoluble particles (B) are obtained by emulsion polymerization using monomers and a carboxylate emulsifier in an amount of from 1 to 50% by mass, based on the mass of the whole monomers which are used as constituent components of the water-insoluble polymer, and the treating liquid is different from the water-based ink composition, and the carboxylate emulsifier is a tallowate soap, a coconut oil fatty acid soap, a rosin soap, a purified fatty acid soap of stearate or oleate, an alkenyl succinate or a N-acylsarcosinate.

Preferably the method further comprises removing at least a part of a solvent of at least one of the water-based ink composition or the treating liquid after applying the water-based ink composition to the recording medium.

Preferably, the water-based ink composition is applied to the recording medium by an inkjet method.

According to a second aspect, the present invention provides an image recording method comprising the sequential steps of:
applying a treating liquid having a pH of 1 to 6 onto an intermediate transfer body;
applying a water-based ink composition comprising water-insoluble colored particles (A), water-insoluble particles (B) comprising a water-insoluble polymer and an emulsifier containing a carboxylate group, and a pH regulator (C) in an amount such that the water-based ink composition has a pH of from 6 to 10 onto the intermediate transfer body, the treating liquid changing the pH of the water-based ink composition causing the water-insoluble colored particles (A) and the water-insoluble particles (B) to aggregate to form an image on the intermediate transfer body;
removing at least a part of a solvent of at least one of the water-based ink composition and the treating liquid from the intermediate transfer body; and
transferring the image formed on the intermediate transfer member to a recording medium,
wherein the water-insoluble particles (B) are obtained by emulsion polymerization using monomers and a carboxylate emulsifier in an amount of from 1 to 50% by mass, based on the mass of the whole monomers which are used as constituent components of the water-insoluble polymer, and the treating liquid is different from the water-based ink composition, and the carboxylate emulsifier is a tallowate soap, a coconut oil fatty acid soap, a rosin soap, a purified fatty acid soap of stearate or oleate, an alkenyl succinate or a N-acylsarcosinate.

Preferably in this second aspect, the water-based ink composition is applied to the intermediate transfer body by an inkjet method.

Preferably in both of the above first and second aspects, the emulsifier containing a carboxylate group is adhered to the surface of the water-insoluble polymer.

Preferably in both of the above first and second aspects, the treating liquid contains at least one acidic compound having a phosphoric acid group, a phosphonic acid group, a phosphinic acid group, a sulphuric acid group, a sulfonic acid group, a sulfinic acid group, or a carboxyl group, or a salt thereof.

Preferably in both of the above first and second aspects, the pH regulator (C) is included in the water-based ink composition in an amount such that the pH of the latter is from 7 to 10.

Preferably the carboxylate emulsifier is an alkenyl succinate.

According to a third aspect, the present invention provides an ink set comprising:
a water-based ink composition comprising water-insoluble colored particles (A),
water-insoluble particles (B) comprising a water-insoluble polymer and an emulsifier containing a carboxylate group, and a pH regulator (C) in an amount such that the water-based ink composition has a pH of from 6 to 10, and
a treating liquid having a pH of 1 to 6, the treating liquid changing the pH of the water-based ink composition thereby causing the water-insoluble colored particles (A) and the water insoluble particles (B) to aggregate to form an image on a recording medium,
wherein the water-insoluble particles (B) are obtained by emulsion polymerization using monomers and a carboxylate emulsifier in an amount of from 1 to 50% by mass, based on the mass of the whole monomers which are used as constituent components of the water-insoluble polymer, and the treating liquid is different from the water-based ink composition, and the carboxylate emulsifier is a tallowate soap, a coconut oil fatty acid soap, a rosin soap, a purified fatty acid soap of stearate or oleate, an alkenyl succinate or a N-acylsarcosinate.

Preferably the emulsifier containing a carboxylate group is adhered to the surface of the water-insoluble polymer.

Preferably the treating liquid contains at least one acidic compound having a phosphoric acid group, a phosphonic acid group, a phosphinic acid group, a sulphuric acid group, a sulfonic acid group, a sulfinic acid group, or a carboxyl group, or a salt thereof.

Preferably, the pH regulator (C) is included in the water-based ink composition in an amount such that the pH of the latter is from 7 to 10.

### BRIEF DESCRIPTION OF THE DRAWINGS

Fig. 1 is a whole configuration view showing one example of an inkjet-recording apparatus that carries out the image recording method of the present invention.
Fig. 2 is a schematic view for explaining the image recording method of the present invention.

### DETAILED DESCRIPTION OF THE INVENTION

The ink composition and the treating liquid described in JP-A No. 2003-82265 had the problems that its aggregation reaction rate is slow, and long time is required until the ink composition contacted with the treating liquid aggregates from that the ink composition is ejected to an intermediate transfer body having a treating liquid applied thereto from nozzles. That is to say, when the ink composition is used, growing of a recording apparatus in size as a whole is unavoidable in an inkjet-recording apparatus which particularly requires rapid recording. Furthermore, even when a two-component reaction method is applied to a method of directly aggregating on a recording medium without using an intermediate transfer body, if aggregation reaction rate between an ink composition and a treating liquid is slow, a colorant permeates together with a solvent permeating in the recoding medium, and this gives rise to the problem that fixability on the recording medium deteriorates, and recording density and contrast ratio are decreased. Therefore, it is an important problem even in a general inkjet-recording method other than a transfer type to speed up aggregation reaction rate between an ink composition and a treating liquid.

On the other hand, the rubbery polymer latex described in JP-A No. 9-302007 showed excellent aggregation properties in a strong acid such as sulfuric acid having corrosive properties to instruments and handlers, but showed insufficient aggregation properties in a weak acid such as a safe organic carboxylic acid. Furthermore, the latex has high gel content. Therefore, when such a latex is used in an ink composition, there were the problems that transferability and fixability of an image are poor and scratch-fastness of an image deteriorates.

The present invention has been made in view of the above circumstances, and provides an ink set, and further provides an image recording method using the ink set.

The ink set and image recording method according to the present invention are described in detail below. First, the water-based ink composition (hereinafter sometimes referred to as an "ink" for simplicity) included in the ink set of the invention is described.

### <Water-based ink composition>

The water-based ink composition includes at least one kind of water-insoluble colored particles (A) and at least one kind of water-insoluble particles (B) that includes a carboxylate emulsifier and a water-insoluble polymer. The water-insoluble particles (B) have a property whereby the particles (B) aggregate due to a change in pH environment.
Since the water-insoluble particles contain a carboxylate emulsifier and a water-insoluble polymer, extremely fast aggregation rate can be achieved. Furthermore, the water-insoluble particles can incorporate the water-insoluble colored particles therein at the time of aggregation, thereby forming an aggregate. Furthermore, since the water-insoluble particles contain the water-insoluble polymer, good transferability can be imparted to the aggregate.
The aggregate of the water-insoluble particles and the water-soluble colored particles are used in image formation.

The water-based ink composition can be used in not only monochromatic image formation, but full color image formation. To form a full color image, a magenta tone ink, a cyan tone ink and a yellow tone ink can be used, and to adjust the tone, a black tone ink may further be used. Furthermore, other than the yellow, magenta and cyan tone inks, red, green, blue and white color inks and so-called specific color inks in printing field (for example, colorless) can be used.

The image recording method that can be used includes a method of applying a water-based ink composition to a medium to be recorded by the means such as an ink-jet method, a mimeograph method or a transfer printing method. Above all, an image recording method including a step of applying the water-based ink composition of the invention by an inkjet method is preferred from the standpoint of downsizing of a recording apparatus and high speed recording properties.

(A) Water-insoluble colored particles
The water-insoluble colored particles (A) in the invention contain at least one kind of colorant. As the colorant, any one of conventional dyes, pigments and the like may be used without particular limitation. Above all, a colorant that is substantially insoluble or sparingly soluble in water is preferred from the standpoint of ink coloring properties. Specific examples of the colorant include various pigments, disperse dyes, oil-soluble dyes and dyestuffs forming J aggregate. Pigments are more preferred.
In the invention, the water-insoluble pigment itself or the pigment itself surface-treated with a dispersant can be used as the water-insoluble colored particles.

The pigment that may be used in the invention is not particularly limited in its kind, and any one of the conventional organic and inorganic pigments may be used. Examples of the pigment that may be used include polycyclic pigments such as azo lake, azo pigment, phthalocyanine pigment, perylene and perynone pigments, anthraquinone pigment, quinacridone pigment, dioxadine pigment, diketopyrrolopyrrole pigment, thioindigo pigment, isoindoline pigment and quinophthalone pigment; dye lakes such as basic dye type lake and acidic dye type lake; organic pigments such as nitro pigment, nitroso pigment, aniline black and daylight fluorescent pigment; and inorganic pigments such as titanium oxide, iron oxide type and carbon black type. Even pigments that are not described in Color Index can be used so long as it is a pigment capable of being dispersed in an aqueous phase. Furthermore, those obtained by surface treating the above-described pigments with a surfactant, a polymeric dispersant or the like, and grafted carbon can also be used. Of the above pigments, azo pigment, phthalocyanine pigment, anthraquinone pigment, quinacridone pigment and carbon black type pigment are preferably used.

Specific examples of the organic pigment used in the invention are described below. Examples of the organic pigment for orange or yellow include C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 128, C.I. Pigment Yellow 138, C.I. Pigment Yellow 151, C.I. Pigment Yellow 155, C.I. Pigment Yellow 180 and C.I. Pigment Yellow 185.

Examples of the organic pigment for magenta or red include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 222 and C.I. Pigment Violet 19.

Examples of the organic pigment for green or cyan include C.I. Pigment Blue 15, C.I. Pigment Blue 15:2, C.I. Pigment Blue 15:3, C.I. Pigment Blue 15:4, C.I. Pigment Blue 16, C.I. Pigment Blue 60, C.I. Pigment Green 7, and siloxane-crosslinked aluminum phthalocyanine described in US Patent 4,311,775.
Examples of the organic pigment for black include C.I. Pigment Black 1, C.I. Pigment Black 6 and C.I. Pigment Black 7.

(Dispersant) When the colorant used in the invention is a pigment, the pigment is preferably dispersed in an aqueous solvent by a dispersant. The dispersant may be a polymer dispersant, or a low molecular surfactant type dispersant. The polymer dispersant may be either one of a water-soluble dispersant or a water-insoluble dispersant.
The low molecular surfactant type dispersant (hereinafter sometimes referred to as a "low molecular dispersant") can be added for the purpose of stably dispersing the organic pigment in a water solvent while maintaining an ink in low viscosity. The low molecular dispersant used herein means a low molecular dispersant having a molecular weigh of 2,000 or lower. The molecular weight of the low molecular dispersant is preferably from 100 to 2,000, and more preferably from 200 to 2,000.

The low molecular dispersant has a structure containing a hydrophilic group and a hydrophobic group. At least one of each of the hydrophilic group and the hydrophobic group may be independently contained in one molecule, and the low molecular dispersant may have plural kinds of the hydrophilic group and the hydrophobic group. The low molecular dispersant can appropriately have a linking group for linking the hydrophilic group and the hydrophobic group.

Examples of the hydrophilic group include an anionic group, a cationic group, a nonionic group, and a betaine type combining those.
The anionic group is not particularly limited so long as it has a negative charge. A phosphoric acid group, a phosphonic acid group, a phosphinic acid group, a sulfuric acid group, a sulfonic acid group, a sulfinic acid group and a carboxyl group are preferred, a phosphoric acid group and carboxyl group are more preferred, and a carboxyl group is further preferred.

The cationic group is not particularly limited so long as it has a positive charge. An organic cationic substituent is preferred, a cationic group containing nitrogen or phosphorus is more preferred, and a cationic group having nitrogen is further preferred. Above all, pyridinium cation and ammonium cation are particularly preferred.
The nonionic group is not particularly limited so long as it does not have negative or positive charge. Examples of the nonionic group include polyalkylene oxide, polyglycerin and a part of sugar unit

It is preferred in the invention that the hydrophilic group is an anionic group from the standpoints of dispersion stability and aggregation properties of a pigment.
When the low molecular dispersant has an anionic hydrophilic group, its pKa is preferably 3 or more from the standpoint of contacting with an acidic treating liquid to accelerate an aggregation reaction. The pKa of the low molecular dispersant in the invention is a value experimentally obtained from a titration curve by titrating a liquid obtained dissolving 1 mmol/liter of a low molecular dispersant in a tetrahydrofuran-water=3:2 (V/V) solution, with an acid or alkali aqueous solution.
Theoretically, when pKa of a low molecular weight dispersant is 3 or more, 50% or more of anionic groups are in a non-dissociation state when contacted with a treating liquid having a pH of about 3. Therefore, water solubility of the low molecular weight dispersant is remarkably decreased, and an aggregation reaction occurs. In other words, aggregation reactivity is improved. From this standpoint, it is preferred that the low molecular dispersant has a carboxylic group as an anionic group.

On the other hand, the hydrophobic group may have any structure of hydrocarbon type, fluorocarbon type, silicone type and the like, and the hydrocarbon type is particularly preferred. Those hydrophobic groups may have any of a linear structure and a branched structure. The hydrophobic group may have one chain structure or two or more chain structure. Where the structure has two or more chains, the structure may have plural kinds of hydrophobic groups.

The hydrophobic group is preferably a hydrocarbon group having from 2 to 24 carbon atoms, more preferably a hydrocarbon group having from 4 to 24 carbon atoms, and further preferably a hydrocarbon group having from 6 to 20 carbon atoms.

Of the polymer dispersants in the invention, a hydrophilic polymer compound can be used as the water-soluble dispersant. Examples of a natural hydrophilic polymer compound include vegetable polymers such as gum Arabic, gum tragacanth, gum guar, gum karaya, locust bean gum, arabinogalactan, pectin and quince seed starch; seaweed polymers such as alginic acid, carrageenan and agar; animal polymers such as gelatin, casein, albumin and collagen; and microbial polymers such as xanthene gum and dextran.

Examples of a chemically modified hydrophilic polymer compound using a natural product as a raw material include cellulose polymers such as methyl cellulose, ethyl cellulose, hydroxyethyl cellulose, hydroxypropyl cellulose and carboxymethyl cellulose; starch polymers such as starch sodium glycolate and starch sodium phosphate ester; and seaweed polymers such as propylene glycol alginate ester.

Examples of a synthetic water-soluble polymer compound include vinyl polymers such as polyvinyl alcohol, polyvinyl pyrrolidone and polyvinyl methyl ether; acrylic resins such as polyacrylamide, polyacrylic acid or its alkali metal salt, and water-soluble styrene acrylic resin; water-soluble styrene maleic acid resins; water-soluble vinylnaphthalene acrylic resins; water-soluble vinylnaphthalene maleic resins; polyvinyl pyrrolidone, polyvinyl alcohol, alkali metal salts of β-naphthalenesulfonic acid formalin condensate; and polymer compounds having a salt of a cationic functional group such as quaternary ammonium or amino group at a side chain.

Of those, a polymer compound containing a carboxyl group is preferred from the standpoints of dispersion stability and aggregation properties of pigment. Polymer compounds containing a carboxyl group, such as acrylic resins such as water-soluble styrene acrylic resin; water-soluble styrene maleic resin; water-soluble vinylnaphthalene acrylic resin; and water-soluble vinylnaphthalene maleic acid resin are particularly preferred.

Of the polymer dispersants, as a non-water-soluble dispersant, a polymer having both a hydrophilic moiety and a hydrophobic moiety may be used. Examples of such a polymer include styrene-(meth)acrylic acid copolymer, styrene-(meth)acrylic acid-(meth)acrylic acid ester copolymer, (meth)acrylic acid ester-(meth)acrylic acid copolymer, polyethylene glycol (meth)acrylate-(meth)acrylic acid copolymer and styrene-maleic acid copolymer.

The polymer dispersant used in the invention has a weight average molecular weight of preferably from 3,000 to 200,000, more preferably from 5,000 to 100,000, further preferably from 5,000 to 80,000, and particularly preferably from 10,000 to 60,000.
The weight average molecular weight can be measured with, for example, gel permeation chromatograph (GPC).

Mixing mass ratio of a pigment and a dispersant (pigment:dispersant) is preferably in a range of from 1:0.06 to 1:3, more preferably in a range of from 1:0.125 to 1:2, and further preferably in a range of from 1:0.125 to 1:1.5.

When a dye is used as the colorant in the invention, a material in which a water-insoluble carrier supporting a dye can be used as water-insoluble colored particles. As the dye, conventional dyes may be used without particular limitation. For example, dyes described in JP-A No. 2001-115066, JP-A No. 2001-335714 and JP-A No. 2002-249677 can preferably be used in the invention. The carrier used is not particularly limited so long as it is insoluble or sparingly soluble in water, and inorganic materials, organic materials and their composite materials can be used. Specifically, carriers described in, for example, JP-A No. 2001-181549 and JP-A No. 2007-169418 can preferably be used in the invention.
The carrier supporting a dye (water-insoluble colored particles) can be used as an aqueous dispersion using a dispersant. As the dispersant, any of the dispersants described hereinabove can be preferably used.

From the standpoints of light resistance and quality of an image, the water-insoluble colored particles used in the invention preferably contain a pigment and a dispersant, more preferably contain an organic pigment and a polymer dispersant, and particularly preferably contain an organic pigment and a polymer dispersant containing a carboxylic group.

The water-insoluble colored particles used in the invention have an average particle diameter of preferably from 10 to 200 nm, more preferably from 10 to 150 nm, and further preferably from 10 to 100 nm. When the average particle diameter is 200 nm or less, color reproducibility becomes better, and in the case of an inkjet method, droplet ejection properties become better. Furthermore, when the average particle diameter is 10 nm or more, light resistance becomes better.
Particle size distribution of the water-insoluble colored particles is not particularly limited, and may be any of wide particle size distribution and monodisperse particle size distribution. A mixture of two kinds or more of water-insoluble colored particles having monodisperse particle size distribution may be used.
The average particle diameter and the particle size distribution of the water-insoluble colored particles can be measured using, for example, a light scattering method.

In the invention, the water-insoluble colored particles may be used in a single kind or as mixtures of two or more kinds thereof.
From the standpoint of image density, the content of the water-insoluble colored particles is preferably from 1 to 25% by mass, more preferably from 2 to 20% by mass, further preferably from 5 to 20% by mass, and particularly preferably from 5 to 15% by mass, based on the mass of the water-based ink composition.

(B) Water-insoluble particle
The water-insoluble particles used in the invention contain a carboxylate emulsifier and a water-insoluble polymer. When the water-insoluble particles contain a carboxylate emulsifier and a water-insoluble polymer, the water-insoluble particles can be aggregated in a rapid aggregation speed due to the change in pH environment, and transferability of an aggregate can become better.
Furthermore, as described in the item of the dispersant having an anionic hydrophilic group, when the emulsifier is a carboxylate type (containing a carboxyl group), rapid aggregation reaction can be induced by contacting with an acidic treating liquid.
The water-insoluble particles used in the invention preferably have the constitution that a carboxylate emulsifier is adhered to the surface of the water-insoluble polymer.

(Water-insoluble polymer) The water-insoluble particles used in the invention contain at least one kind of a water-insoluble polymer. Furthermore, as the water-insoluble polymer, two kinds or more thereof having different structure, copolymerization ration and molecular weight, may be used in combinations.
The water-insoluble polymer used in the invention is not particularly limited. Examples of the water-insoluble polymer that can be used include vinyl polymers, and condensation polymers (epoxy resin, polyester, polyurethane, polyamide, cellulose, polyether, polyurea, polyimide, polycarbonate and the like).

Preferred examples of the vinyl polymer and the monomer constituting the vinyl polymer include the compounds described in JP-A No. 2001-181549 and JP-A No. 2002-88294. Furthermore, vinyl polymers having a dissociable group introduced at the end of a polymer chain by radical polymerization of a vinyl monomer using a chain transfer agent having a dissociable group (or a substituent that can be derived into a dissociable group), a polymerization initiator or an iniferter, or by ionic polymerization using a compound having a dissociable group (or a substituent that can be derived into a dissociable group) in either of an initiator or a terminator.
Preferred examples of the condensation polymer and the monomer of the condensation polymer include the compounds described in JP-ANo. 2001-247787.

In the invention, the water-insoluble polymer contained in the water-insoluble particles (B) has a glass transition temperature (Tg) in a range of preferably from 5 to 100°C, more preferably from 30 to 100°C, and further preferably from 40 to 90°C, from the standpoints of ink droplet ejection properties and ink fixability in inkjet method. When Tg of the water-insoluble polymer is 5°C or higher, the ink droplet ejection properties become better. When Tg is 100°C or lower, ink fixability becomes better.

The water-insoluble polymer may contain a dissociable group and/or a nonionic dispersible group.
When the water-insoluble polymer contains an anionic dissociable group, the content of the anionic dissociable group is preferably 50 or less, more preferably 20 or less, and particularly preferably 10 or less, in terms of an acid value (KOH mg/g) from the standpoint of accelerating aggregation reaction by contacting with an acidic treating liquid. The description regarding the anionic group as in the above can also be applied to the anionic dissociable group.

When water-insoluble polymer contains the nonionic dispersible group, the content of the nonionic dispersible group is preferably 10 or less in terms of the number of functional group (mmol/g), and more preferably the nonionic dispersible group is not contained, from the standpoint of aggregation reaction. The description regarding the nonionic group as in the above can also be applied to the nonionic dispersible group.

On the other hand, when the water-insoluble polymer contains the cationic dissociable group, the content of the cationic group is preferably from 0 to 100, more preferably from 0 to 70, and particularly preferably from 10 to 60, in terms of the number of functional group (mmol/g). When the water-insoluble polymer contains the cationic dissociable group, the pH of the ink is decreased, thereby particle charge of the water-insoluble particles (B) can be changed from negative charge to positive charge, and as a result, the aggregation reaction speed can further be improved.

The cationic dissociable group is not particularly limited so long as it has positive charge. Cationic organic dissociable groups are preferred, and cationic organic dissociable groups containing nitrogen atom or phosphorus atom are more preferred. Above all, pyridinium cation or ammonium cation is further preferred.
Specific examples of the monomer containing a cationic dissociable group include monomers having a tertiary amino group, such as N,N-dialkyl aminoethyl (meth)acrylate, N,N-dialkyl aminopropyl (meth)acrylate and N,N-dialkyl aminopropyl (meth)acrylamide; vinyl imidazole; and vinylpyridine.

The water-insoluble polymer used in the invention has a molecular weight of from 3,000 to 2,000,000, preferably from 5,000 to 1,000,000, and more preferably from 10,000 to 1,000,000, in terms of a weight average molecular weight from the standpoint of aggregation properties and ink transferability.

PL-01 to PL-22 are shown below as the examples of the compound of the water-insoluble polymer. The figures in the parenthesis indicates mass ratio of copolymerization components.
PL-01: Styrene/2-ethylhexyl methacrylate copolymer (90/10)
PL-02: Styrene/butyl acrylate copolymer (80/20)
PL-03: Styrene/butyl acrylate/dimethylaminoethyl methacrylate copolymer (68/22/10)
PL-04: Styrene/butyl methacrylate/acrylic acid copolymer (70/27/3)
PL-05: Styrene/butyl methacrylate/acrylic acid/dimethylaminoethyl methacrylate copolymer (67/24/3/6)
PL-06: Styrene/t-butyl methacrylate copolymer (50/50)
PL-07: Benzyl methacrylate/butyl methacrylate/methacrylic acid copolymer (80/17/3)
PL-08: Benzyl methacrylate/cyclohexyl methacrylate/dimethylaminoethyl acrylate copolymer (70/20/10)
PL-09: Benzyl methacrylate/dodecyl methacrylate/N-vinyl pyrrolidone copolymer (77/15/8)
PL-10: Benzyl methacrylate/methyl methacrylate/hydroxyethyl methacrylate copolymer (80/10/10)
PL-11: Benzyl methacrylate/dimethylaminopropyl acrylate copolymer (92/8)
PL-12: Styrene/hexyl acrylate/dimethylaminopropyl acrylamide copolymer (80/15/5)
PL-13: Styrene/benzyl methacrylate/N-vinylimidazole copolymer (60/35/5)
PL-14: Benzyl methacrylate/butyl methacrylate/N-acryloyl morpholine copolymer (80/10/10)
PL-15: Benzyl methacrylate/t-octyl acrylamide/acrylic acid copolymer (80/17/3)
PL-16: Styrene/butyl methacrylate/glycidyl methacrylate copolymer (75/15/10)
PL-17: Styrene/butyl methacrylate/2-carboxyethyl acrylate copolymer (70/25/5)
PL-18: Styrene/butyl methacrylate/4-vinylpyridine copolymer (70/25/5)
PL-19: Styrene/4-phenoxyethyl acrylate/dimethylaminopropyl methacrylate copolymer (70/23/7)
PL-20: Styrene/butyl methacrylate copolymer (65/35)
PL-21: Styrene/butyl acrylate/ethylene glycol diacrylate copolymer (65/30/5)
PL-22: Styrene/3-chloro-2-hydroxypropyl methacrylate copolymer (80/20)

### (Carboxylate emulsifier)

The water-insoluble particles (B) used in the invention contain at least one kind of a carboxylate emulsifier. The carboxylate emulsifier is tallowate soap, a coconut oil fatty acid soap, a rosin soap, a purified fatty acid soap of stearate or oleate, an alkenyl succinate or a N-acylsarcosinate. Above all, alkenyl succinates are preferred from stability to shear force.

Preferred examples of the reactive carboxylate emulsifier include compounds described in, for example, JP-A No. 9-302007.

### ((B) Preparation method of water-insoluble particles)

The water-insoluble particles (B) containing a carboxylate emulsifier and a water-insoluble polymer are prepared by conducting emulsion polymerization using the above carboxylate emulsifier.

The emulsion polymerization can be conducted by, for example, polymerizing an emulsified material prepared by adding a monomer, a polymerization initiator, an emulsifier and according to need, a chain transfer agent to an aqueous medium (for example, water).

The monomer used is not particularly limited, and monomers that may be used as a constituent component of the water-insoluble polymer can preferably be used.

The polymerization initiator used is not particularly limited. Examples of the polymerization initiator that can be used include inorganic persulfates (for example, potassium persulfate, sodium persulfate and ammonium persulfate), azo initiators (for example, 2,2'-azobis(2-amidinopropane)dihydrochloride and 2,2'-azobis[2-methyl-N-(2-hydroxyethyl)-propion amide]), and organic peroxides (for example, t-butyl peroxypivalate and t-butyl hydroxyperoxide). Those can be used alone or as mixtures of two kinds or more thereof.

Of those, azo initiators and organic peroxides are preferably used from the standpoint of aggregation properties of the water-insoluble particles.

In the invention, the polymerization initiator is used in an amount of generally from 0.01 to 2% by mass, and preferably from 0.2 to 1% by mass, based on the mass of the whole monomers.

The carboxylate emulsifier described above is used from the standpoint of aggregation properties of the water-insoluble particles.

In the invention, the emulsifier is used in an amount of from 1 to 50% by mass, and preferably from 2 to 20% by mass, based on the mass of the whole monomers from the standpoint of aggregation properties of the water-insoluble particles.

Examples of the chain transfer agents that may be used include conventional compounds such as carbon tetrahalide, dimers of styrenes, dimers of (meth)acrylic esters, mercaptans and sulfides. Above all, dimers of styrenes, and mercaptans, described in JP-A No. 5-17510 can preferably be used.

The water-insoluble particles used in the invention have an average particle diameter of preferably from 20 to 400 nm, more preferably from 20 to 200 nm, and further preferably from 20 to 100 nm. When the average particle diameter is 20 nm or more, aggregation characteristics may be improved. When the average particle diameter is 400 nm or less, ink droplet injection properties may be improved.

Particle size distribution of the water-insoluble particles is not particularly limited, and the particles may have any of a wide particle size distribution and a monodisperse particle size distribution. Furthermore, the water-insoluble particles may be used as mixtures of two kinds or more thereof.

The average particle diameter and particle size distribution of the water-insoluble particles can be measured using, for example, a light scattering method.

The content of the water-insoluble particles in the invention is preferably from 1 to 30% by mass, and more preferably from 5 to 15% by mass, based on the mass of the ink composition from the standpoints of gloss of an image, and the like.

The content ratio between water-insoluble colored particles and water-insoluble particles (water-insoluble colored particles/water-insoluble particles) in the water-based ink composition of the invention is preferably from 1/0.5 to 1/10, and more preferably from 1/1 to 1/4, from the standpoints of scratch fastness of an image, and the like.

### (Water-soluble organic solvent)

The water-based ink composition for use in the invention contains water as a solvent, and can further contain a water-soluble organic solvent. The water-soluble organic solvent can be contained as a drying inhibitor or a permeation accelerator.
Where the water-based ink composition for use in the invention is particularly applied to an image recording method by an inkjet method, the drying inhibitor can effectively prevent clogging of nozzle that may possibly be generated by drying of an ink at an ink jet orifice.

The drying inhibitor is preferably a water-soluble organic solvent having vapor pressure lower than that of water. Specific examples of the drying inhibitor include polyhydric alcohols such as ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin and trimethylolpropane; lower alkyl ethers of polyhydric alcohol, such as ethylene glycol monomethyl (or ethyl) ether, diethylene glycol monomethyl (or ethyl) ether and triethylene glycol monoethyl (or butyl) ether; heterocycles such as 2-pyrrolidone, N-methyl-2-pyrrolidone, 1,3-dimethyl-2-imidazolidinone and N-ethylmorpholine; sulfur-containing compounds such as sulfolane, dimethylsufoxide and 3-sulforene; polyfunctional compounds such as diacetone alcohol and diethanolamine; and urea derivatives. Above all, polyhydric alcohols such as glycerin and diethylene glycol are preferred as the drying inhibitor. Those drying inhibitors may be used alone or as mixtures of two kinds or more thereof. Those drying inhibitors are preferably contained in an amount of from 10 to 50% by mass in the ink.

The permeation accelerator is preferably used for the purpose of well permeating the ink into a recording medium (printing paper). Specific examples of the permeation accelerator include alcohols such as ethanol, isopropanol, butanol, di(tri)ethylene glycol monobutyl ether and 1,2-hexanediol; sodium lauryl sulafate, sodium oleate and nonionic surfactants. When the permeation accelerator is contained in the ink composition in an amount of from 5 to 30% by mass, sufficient effect is exhibited. The permeation accelerator is preferably used within a range of the addition amount such that bleeding of printing and print-through are not generated.

The water-soluble organic solvent can be used to adjust viscosity, other than the above. Specific examples of the water-soluble organic solvent that can be used to adjust viscosity include alcohols (for example, methanol, ethanol, propanol, isopropanol, butanol, isobutanol, sec-butanol, t-butanol, pentanol, hexanol, cyclohexanol and benzyl alcohol), polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol and thiodiglycol), glycol derivatives (for example, ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether and ethylene glycol monophenyl ether), amines (for example, ethanolamine, diethanolamine, triethanolamine, N-methyl diethanolamine, N-ethyl diethanolamine, morpholine, N-ethylmorpholine, ethylene diamine, diethylene triamine, triethylene tetramine, polyethylene imine and tetramethylpropylene diamine), and other polar solvents (for example, formaldehyde, N,N-dimethylformamide, N,N-dimethylacetamide, diemthylsulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile and acetone).
The water-soluble organic solvent may be used alone or as mixtures of two kinds or more thereof.

(Other additives)
Examples of other additives used in the invention include conventional additives such as color fading inhibitor, emulsion stabilizer, permeation accelerator, ultraviolet absorber, preservative, mildew-proofing agent, pH regulator, surface tension regulator, defoamer, viscosity regulator, dispersant, dispersion stabilizer, anti-rust agent and chelating agent. Those various additives may directly be added after preparation of the water-based ink composition, or may be added at the time of preparation of the water-based ink composition.

The ultraviolet absorber is used for the purpose of improving preservability of an image. The ultraviolet absorber can use benzotriazole compounds described in, for example, JP-ANos. 58-185677, 61-190537, 2-782, 5-197075 and 9-34057; benzophenone compounds described in, for example, JP-A Nos. 46-2784 and 5-194483, and US Patent No. 3,214,463; cinnamic acid compounds described in, for example, JP-B Nos. 48-30492 and 56-21141, and JP-A No. 10-88106; triazine compounds described in, for example, JP-A Nos. 4-298503, 8-53427, 8-239368 and 10-182621, and JP-A No. 8-501291; compounds described in Research Disclosure No. 24239; and compounds that absorb ultraviolet light and emit fluorescence, i.e., fluorescent brighteners, represented by stilbene compounds or benzoxazole compounds.

The color fading inhibitor is used for the purpose of improving storability of an image. Examples of the color fading inhibitor that can be used include various organic color fading inhibitors and metal complex color fading inhibitors. Examples of the organic color fading inhibitor include hydroquinones, alkoxyphenols, dialkoxyphenols, phenols, anilines, amines, indanes, chromanes, alkoxyanilines and heterocycles. Examples of the metal complex color fading inhibitor include a nickel complex and a zinc complex. More specifically, compounds described in the patents cited in Research Disclosure No. 17643, chapter VII, items I to J; Research Disclosure No. 15162: Research Disclosure No. 18716, page 650, the left-hand column; Research Disclosure No. 36544, page 527; Research Disclosure No. 307105, page 872; and Research Disclosure No. 15162, and compounds included in the formulae of the representative compounds and the exemplified compounds described on pages 127 to 137 of JP-A No. 62-215272 can be used.

Examples of the mildew-proofing agent include sodium dehydroacetate, sodium benzoate, sodium pyridinethion-1-oxide, p-hydroxybenzoic acid ethyl ester, 1,2-benzisothiazolin-3-one and its salt. Those are preferably used in the water-based ink composition in an amount of from 0.02 to 1.00% by mass.
As the pH regulator, a neutralizer (organic base and inorganic alkali) may be used. The pH regulator is added in an amount such that the water-based ink composition has a pH of from 6 to 10, and preferably from 7 to 10, for the purpose of improving storage stability of the water-based ink composition.

Examples of the surface tension regulator include nonionic surfactants, cationic surfactants, anionic surfactants and betaine surfactants.
The surface tension regulator is added in an amount such that the surface tension of the water-based ink composition is adjusted to preferably from 20 to 60 mN/m, more preferably from 20 to 45 mN/m, and further preferably from 25 to 40 mN/m, in order to well eject the water-based ink composition by an inkjet method. On the other hand, when an ink is applied by a method other than an inkjet method, the surface tension is preferably in a range of from 20 to 60 mN/m, and more preferably in a range of from 30 to 50 mN/m.
The surface tension of the water-based ink composition can be measured using, for example, a plate method.

Specific examples of the surfactant as a hydrocarbon type preferably include anionic surfactants such as fatty acid salts, alkyl sulfate ester salts, alkyl benzene sulfonates, alkyl naphthalene sulfonates, dialkyl sulfosuccinates, alkyl phosphate ester salts, naphthalenesulfonic acid-formalin condensates and polyoxyethylene alkyl sulfate ester salts; and nonionic surfactants such as polyoxyethylene alkyl ether, polyoxyethylene alkyl allyl ether, polyoxyethylene fatty acid ester, sorbitan fatty acid ester, polyoxyethylene sorbitan fatty acid ester, polyoxyethylene alkyl amine, glycerin fatty acid ester and oxyethylene oxypropylene block copolymer. SURFYNOLS (trade name, products of Air Products & Chemicals) which are an acetylene type polyoxyethylene oxide surfactant are preferably used. Furthermore, amine oxide type amphoteric surfactants such as N,N-dimethyl-N-alkyl amine oxide are preferred.
Additionally, materials described on pages (37) to (38) of JP-A No. 59-157636 and Research Disclosure No. 308119 (1989) as surfactants can be used.
When fluorine (alkyl fluoride type) surfactants, silicone surfactants and the like, such as those described in JP-ANos. 2003-322926, 2004-325707 and 2004-309806 are used, scratch fastness can be improved.
The surface tension regulator can be used as a defoamer, and fluorine compounds, silicone compounds, chelating agents represented by EDTA, and the like can be used.

When the ink is applied by an inkjet method, the water-based ink composition of the invention has a viscosity preferably in a range of from 1 to 30 mPa·s, more preferably in a range of from 1 to 20 mPa·s, further preferably in a range of from 2 to 15 mPa·s, and particularly preferably in a range of from 2 to 10 mPa·s, from the standpoints of droplet ejection stability and aggregation speed.
When the ink is applied by a method other than an inkjet method, the viscosity is preferably in a range of from 1 to 40 mPa·s, and more preferably in a range of from 5 to 20 mPa·s.
The viscosity of the water-based ink composition can be measured using, for example, a Brookfield viscometer.

<Ink set>
The ink set of the invention includes at least one kind of the previously described water-based ink composition and at least one kind of a treating liquid that changes pH environment of the water-based ink composition. When the water-based ink composition is contacted with the treating liquid, dispersion stability of the water-insoluble particles changes, and the water-insoluble colored particles and the water-insoluble particles can rapidly be aggregated.

The treating liquid used in the invention has a pH of preferably from 1 to 6, more preferably from 2 to 5, and further preferably from 3 to 5, from the standpoint of aggregation speed of the water-based ink composition. The treating liquid used in the invention may include at least one kind of an acidic compound. Examples of the acidic compound that can be used include a compound having a phosphoric acid group, a phosphonic acid group, a phosphinic acid group, a sulfuric acid group, a sulfonic acid group, a sulfinic acid group or a carboxyl group, and its salt. Above all, from the standpoint of aggregation speed of the water-based ink composition, a compound having a phosphoric acid group or a carboxyl group is more preferred, and a compound having a carboxyl group is further preferred.

Preferable examples of the compound having a carboxyl group in the invention include compounds having a furan, pyrrole, pyrroline, pyrrolidone, pyrone, thiophene, indole, pyridine or quinoline structure, and further having a carboxyl group as a functional group. Specifically, the treating liquid can be configured by containing pyrrolidone carboxylic acid, pyrone carboxylic acid, pyrrole carboxylic acid, furan carboxylic acid, pyridine carboxylic acid, coumaric acid, thiophene carboxylic acid, nicotinic acid, derivatives of those compounds, their salts, and the like.
Of the compounds having a carboxyl group, pyrrolidone carboxylic acid, pyrone carboxylic acid, furan carboxylic acid, coumaric acid, derivatives of those compounds, and their salts are preferred from the standpoints of safety and low corrosion property. Those compounds may be used alone or as mixtures of two or more thereof.

The treating liquid used in the invention can further include an aqueous solvent (for example, water), in addition to the above acidic compound.
The acidic compound is contained in the treating liquid in an amount of preferably from 5 to 95% by mass, and more preferably from 10 to 80% by mass, based on the total mass of the treating liquid from the standpoint of aggregation effect.

The treating liquid may contain other additives in a range that the effect of the invention is not impaired. Examples of the other additives include the conventional additives such as drying inhibitor (wetting agent), color fading inhibitor, emulsion stabilizer, permeation accelerator, ultraviolet absorber, preservative, mildew-proofing agent, pH regulator, surface tension regulator, defoamer, viscosity regulator, dispersant, dispersion stabilizer, anti-rust agent and chelating agent. Specific examples of the other additives contained in the water-based ink composition as described above can be applied.

The treating liquid used in the invention has viscosity preferably in a range of from 1 to 30 mPa·s, more preferably in a range of from 1 to 20 mPa·s, further preferably in a range of from 2 to 15 mPa·s, and particularly preferably in a range of from 2 to 10 mPa·s, from the standpoint of aggregation speed of the water-based ink composition.
The treating liquid has surface tension of preferably from 20 to 60 mN/m, more preferably from 20 to 45 mN/m, and further preferably from 25 to 40 mN/m, from the standpoint of aggregation speed of the water-based ink composition.
An image recording method using the ink set of the invention is described below.

<Image recording method>
A first image recording method of the invention includes applying a treating liquid included in the ink set to a recording medium (treatment liquid applying step), applying at least one kind of a water-based ink composition included in the ink set to the recording medium to which the treating liquid has been applied, to aggregate the water-insoluble colored particles (A) and water-insoluble particles (B) that are contained in the water-based ink composition, thereby forming an image on the recording medium (aggregation step).
When the above ink set is used, it is possible to rapidly aggregate the water-based ink composition.

The first image recording method of the invention preferably further includes a solvent removal step that removes at least a part of a solvent in the water-based ink composition and the treating liquid, after the aggregation step. By this step, it is possible to suppress the occurrence of image bleeding of the formed image, print-through, distortion of a recording medium, and the like.

A second image recording method of the invention includes applying a treating liquid included in the ink set to an intermediate transfer body (treating liquid applying step), applying at least one kind of a water-based ink composition included in the ink set to the intermediate transfer body to which the treating liquid has been applied, to aggregate water-insoluble colored particles (A) and water-insoluble particles (B) that are contained in the water-based ink composition, thereby forming an image on the intermediate transfer body (aggregation step), removing at least a part of a solvent of the ink composition and the treating liquid from the intermediate transfer body after the aggregation step (solvent removal step), and transferring the image formed on the intermediate transfer body to a recording medium after the solvent removal step (transfer step).
When the ink set of the invention is used, it is possible to rapidly aggregate the water-based ink composition, and to obtain an image constituted of an aggregate having good transferability.

In the image recording method of the invention, as a method of applying the treating liquid onto the recording medium or the intermediate transfer body, conventional liquid applyling methods may be used without particular limitation. Examples of the liquid applying method include applying by an inkjet method, and applying by a coating roller.

As the method for applying the water-based ink composition to the recording medium or the intermediate transfer body, having the treating liquid applied thereto, conventional liquid applying methods may be used without particular limitation. Examples of the liquid applying method include applying by an inkjet method. It is preferred in the invention that the water-based ink composition is applied by an inkjet method from the standpoints of rapid recording properties.

As one example of the image recording method of the invention, particularly an image recording method by an inkjet method and an apparatus for carrying out the method are described in detail below by reference to the accompanying drawings.

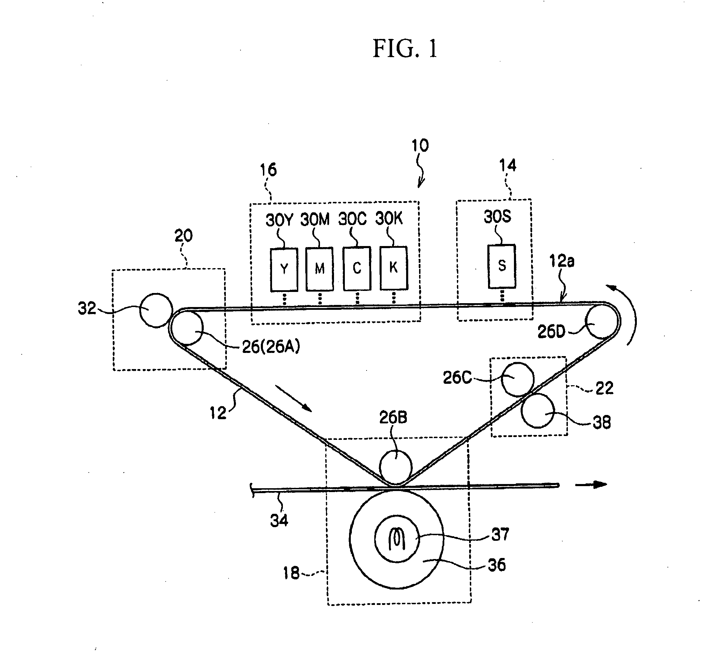

[Inkjet-recording apparatus]
Fig. 1 is one example of the whole constitution of a transfer type inkjet-recording apparatus for carrying out an inkjet-recording method using the ink set of the invention.
As shown in Fig. 1, an inkjet-recording apparatus 10 includes an intermediate transfer body 12, a treating liquid applying unit 14, an ink discharging unit 16 and transfer unit 18 as the main constitution, and further includes a solvent removal unit 20 and a cleaning unit 22. Further, although not shown in the drawing, the apparatus can further comprise an image fixing unit which fixes an image transferred onto a recording medium 34.

The intermediate transfer body 12 is constituted of an endless belt having a given width, and has a structure that the belt is wound and hung on plural rollers 26. In the present embodiment, four rollers 26A to 26D are used as one example. The intermediate transfer body 12 is not limited to an endless belt, and a method of conveying a sheet-like intermediate transfer body with a conveyer belt, and a drum-shaped member can be used.
It is constituted such that power of a motor (not shown) is transmitted to at least one roller of the plural rollers 26, and by this drive of the motor, the intermediate transfer body 12 rotates in a counterclockwise direction (hereinafter referred to as a "rotation direction of a transfer body") outside each roller 26 (26A to 26D) as shown in Fig. 1.

A recording head (treating liquid head) 30S corresponding to a treating liquid is provided in the treating liquid applying unit 14. The treating liquid head 30S discharges the treating liquid from the discharge face facing the intermediate transfer body 12, thereby the treating liquid is applied to a recording face 12a of the intermediate transfer body 12. The treating liquid applying unit 14 is not limited to that of a method of discharging the treating liquid from a nozzle-shaped head, but that of a coating method of using a coating roller may be used. By this coating method, it is possible to easily impart the treating liquid onto nearly the entire surface of the intermediate transfer body 12 including the image region to which ink droplets are deposited. In this case, it is preferred that the treating liquid on the intermediate transfer body 12 has a thickness of from 1 to 5 µm. Means for making the thickness of the treating liquid on the intermediate transfer body 12 constant may further be provided. For example, there are a method of using an air knife, and a method of providing a member having a sharp angle on the intermediate transfer body 12 with a gap corresponding to a defined amount of a treating liquid thickness.

The ink discharging unit 16 is arranged at the downstream side in the rotation direction of the intermediate transfer body, of the treating liquid applying unit 14. The ink discharge unit 16 is provided with recording heads (ink heads) 30K, 30C, 30M and 30Y corresponding to each color ink of black (K), cyan (C), magenta (M) and yellow (Y). Each ink satisfying the water-based ink composition conditions of the invention is stored in each ink storage portion not shown corresponding to each color ink, and supplied to each of recording heads 30K, 30C, 30M and 30Y.
Each of ink heads 30K, 30C, 30M and 30Y discharges each of the corresponding color inks from the discharge face facing the intermediate transfer body 12, thereby, each ink is applied to the recording face 12a of the intermediate transfer body 12.

The treating liquid head 30S and the ink heads 30K, 30C, 30M and 30Y each are in a form of a full line head such that many discharge ports (nozzles) are formed over the maximum recording width of images formed on the intermediate transfer body 12 (maximum recording width). Image recording can be conducted in high speed to the intermediate transfer body 12 as compared with a serial type of conducting recording while reciprocally scanning a short shuttle head in a width direction of the intermediate transfer body 12 (front-back direction of the paper showing Fig. 1). Of course, the invention may also be preferably applied to a method that relatively high speed recording is possible even a serial type, for example, a one pass recording method that forms one line by one scanning.

In the present embodiment, each recording head (treating liquid head 30S and ink heads 30K, 30C, 30M and 30Y) has all the same structure, and those are represented by the symbol 30 as the representative, thereby showing a recording head.
When the treating liquid is discharged from the treating liquid head 30S toward the intermediate transfer body 12, the region of the intermediate transfer body 12 having the treating liquid applied thereto sequentially moves just under the ink heads 30K, 30C, 30M and 30Y with the rotation of the intermediate transfer body 12, and the corresponding each color ink is discharged from the each of the ink heads 30K, 30C, 30M and 30Y, respectively.
The amount of the treating liquid applied and the amount of the ink applied are preferably adjusted according to need. For example, the amount of the treating liquid applied may be changed to, for example, adjust properties such as viscoelasticity of an aggregate formed by mixing the treating liquid and the ink according to the rotating recording medium.

The solvent removal unit 20 is arranged at the downstream side of the ink discharge unit 16 in the rotation direction of the intermediate transfer body. The solvent removal unit 20 is provided with a solvent removal roller 32 at the position facing a roller 26A so as to sandwich the intermediate transfer body 12. The solvent removal roller 32 is constituted of a roller-shaped porous material, and is arranged so as to contact a recording face 12a of the intermediate transfer body 12. Other embodiment includes a method of removing excess solvent from the intermediate transfer body 12 with an air knife, and a method of removing a solvent by heating to vaporize the same. As the solvent removal method, any method may be used, but it is preferred to use a method that does not depend on heat. The means of vaporizing a solvent by heating the surface of the transfer body or applying heat to an aggregate on a transfer body may excessively remove a solvent by overheating of the aggregate and thus may not maintain preferable viscoelasticity of an aggregate in transferring. As a result, transferability may rather deteriorate. Furthermore, there may be influence on ink discharge property from an inkjet head due to heat of an intermediate transfer body.

The solvent removal unit 20 removes a solvent on the recording face 12a of the intermediate transfer body 12 by the solvent removal roller 32. As a result, a solvent is removed in the solvent removal unit 20 even when a large amount of treating liquid is applied to the recording face 12a of the intermediate transfer body 12, and therefore, a large amount of a solvent (dispersion medium) is not transferred to a recording medium 34 in the transfer unit 18. Consequently, even when a paper is used as the recording medium 34, the typical problem observed in an aqueous medium, such as curling or cockling is not generated.

When excess solvent is removed from an aggregate by the solvent removal unit 20, the aggregate is concentrated and internal cohesive force can further be enhanced. As a result, fusion of resin particles contained in the aggregate is effectively accelerated, and stronger internal cohesive force can be imparted to the aggregate up to a transfer step. Furthermore, by effective concentration of the aggregate by solvent removal, it is possible to impart, to an image, good fixability and gloss that can be exhibited after transferring to a recording medium.
It is not always necessary to remove all of a solvent by the solvent removal unit 20. When a solvent is excessively removed to excessively concentrate an ink aggregate, adhesive force of the aggregate to a transfer body is too strong, so that excessive pressure is required in transferring, which is not preferred. To maintain appropriate viscoelasticity in the transfer body, it is desired to remain a small amount of a solvent. The effects obtained by remaining a small amount of a solvent are as follows. That is, since an aggregate is hydrophobic, a solvent component which is difficult to evaporate (mainly an organic solvent such as glycerin) is hydrophilic, therefore, the aggregate and a residual solvent component are separated after carrying out the solvent removal, and a thin liquid layer including the residual solvent component is formed between the aggregate and the intermediate transfer body. Therefore, adhesive force of the aggregate to the transfer body is weakened, and this is advantageous to improve transferability.

The transfer unit 18 is arranged at the downstream side of the solvent removal unit 20 in the rotation direction of the intermediate transfer body. The transfer unit 18 is provided with a pressure roller 36 at a position facing a roller 26B so as to sandwich the intermediate transfer body 12. The pressure roller 36 has a heater 37 inside thereof, and temperature of a circumferential surface of the pressure roller 36 elevates by the heater 37. The recording medium 34 is conveyed from the left side to the right side in Fig. 1 so as to pass between the intermediate transfer body 12 and the pressure roller 36. When the recording medium passes between the intermediate transfer body 12 and the pressure roller 36, a front side of the recording medium 34 is contacted with the recording face 12a of the intermediate transfer body 12, and pressure is applied to the recording medium 34 with the pressure roller 36 from the back thereof, thereby an image formed on the recording face 12a of the intermediate transfer body 12 is transferred and formed onto the recording medium 34. Thus, a structure in which a heating part is provided at only a transfer portion of a transfer body is desirable in the invention. By having such a structure, it is possible to prevent excessive thermal load by heating the entire surface of a transfer body and excessive removal of a solvent component contained in an aggregate. Furthermore, when the aggregate is heated at the transfer unit 18, almost all of a solvent contained in the aggregate can be removed, and fusion of resin can be accelerated in combination with the physical effect of the pressurizing by which the aggregate is concentrated. Accordingly, stronger internal cohesive force can be imparted to the aggregate during a short period of from the time just before transfer step to the time conducting transfer in a region that a transfer body is contacted with a pressure heating roller.

Even when not carrying out the solvent removal step before transferring, a solvent can be removed by heating in a short period of time, and thus there is no substantial problem on transfer rate. However, when carrying out the solvent removal step, absolute amount of a solvent to be vaporized in the transfer unit can be small. Therefore, not only the concentration effect can be further enhanced, but thermal load at the time of transferring can be reduced. Furthermore, good fixability and gloss can be imparted to an image even after transferring the same to a recording medium, by the effective concentration of the ink aggregate by heating at the transfer unit. Temperature and pressure in transferring may freely be adjusted to appropriate conditions depending on a recording medium, printing conditions, and the like.

The intermediate transfer body 12 may have a structure having a releasable surface layer according to need. The surface of a releasability-imparted transfer body has properties of low surface energy and high releasability, and it is therefore possible to realize high transfer ratio. According to the invention, it is possible to obtain sufficient transfer ratio without particularly imparting releasability. However, releasability may be imparted to the surface of the intermediate transfer body from the standpoints of cleaning load and the like. The "releasable surface" used herein means the surface having a critical surface tension of 30 mN/m or less, or a contact angle to water of 75° or more.
Examples of the preferred material used in the surface layer of the intermediate transfer body 12 include conventional materials such as a polyurethane resin, a polyester resin, a polystyrene resin, a polyolefin resin, a polybutadiene resin, a polyamide resin, a polyvinyl chloride resin, a polyethylene resin, a fluorine resin and a polyimide resin.

The cleaning unit 22 is arranged at the downstream side of the transfer unit 18 in the rotation direction of a transfer body, and at the upstream side of the treating liquid applying unit 14 in the rotation direction of a transfer body. The cleaning unit 22 is provided with a cleaning roller 38 at the position facing the roller 26C so as to sandwich the intermediate transfer body 12 such that the cleaning roller 38 is arranged so as to contact with the recording face 12a of the intermediate transfer body 12, and the cleaning roller 38 performs removal of residues and the like on the recording face 12a of the intermediate transfer body 12 after transferring.
The cleaning roller 38 may be a cleaning roller that includes a flexible porous member and performs a method of cleaning the surface (recording face 12a) of the intermediate transfer body while impregnating with a cleaning liquid by a cleaning liquid applying means; a cleaning roller that is provided with a brush on the surface thereof and performs a method of removing dusts on the surface of the intermediate transfer body with the brush while applying a cleaning liquid to the surface of the intermediate transfer body; a cleaning roller that is provided with a flexible blade on the surface thereof and performs a method of scraping off residues on the surface of the intermediate transfer body; or the like. When linear velocity on the surface of the cleaning roller 38 is set to be lower or faster than the linear velocity on the surface of the intermediate transfer body, rather than being set to equal to that, removal ratio of the residue can be increased. Shear force is generated on the surface of the intermediate transfer body due to speed difference between the surface of the cleaning roller 38 and the surface of the intermediate transfer body, and this makes it possible to efficiently remove residues.

In the invention, an image fixing unit may additionally be provided according to need in order to impart further strong fixability to a recording medium after transferring the aggregate to the recording medium.
The image fixing unit is arranged at the recording medium exit side (right side in Fig. 1) of the transfer unit 18. In the image fixing unit, two fixing rollers may be provided on the front and back sides of the recording medium. An image transferred and formed on the recording medium 34 is pressurized with those rollers and heated, thereby fixability of a recording image on the recording medium 34 can be improved. The fixing roller preferably is a pair of rollers comprising one pressure roller and one heating roller, but is not limited to this embodiment.

In the invention, means (not shown) for applying heat treatment to the recording medium 34 before conveying the recording medium to the transfer unit 18 can be provided.
When the recording medium 34 that is directly contacted with an aggregate already reaches the desired transfer temperature, heat transmission can efficiently be conducted in a shorter period of time when transfer nipping. As compared with the case of heating only when transfer nipping, when the recording medium is previously heated to the desired transfer temperature, an ink aggregate and the surface of the recording medium are contacted. This temperature can freely be controlled depending on the kind of the recording medium 34, and it is possible to control viscoelasticity of the ink aggregate by this temperature control.

When the recording medium 34 has an irregular surface due to pulp fibers, for example, like a plain paper or a high-quality paper, and thus an anchor effect is expected between the aggregate and the surface of the recording medium, good fixability can be imparted to a plain paper, a high-quality paper or the like with the optimum viscoelasticity of the aggregate by adjusting viscoelasticity of the aggregate by controlling not only heating temperature at the transfer unit, but heating temperature on the surface of media contacted when directly transferring.
Furthermore, when the recording medium 34 is a recording medium having smooth surface, such as a coated paper, it is possible to impart good fixability that can be exhibited after transferring, by controlling the viscoelasticity of the aggregate so as to be harder than that of an aggregate when a recording medium having uneven surface is used.

[Inkjet-recording method] The inkjet-recording method of the invention by which an image is recorded using the ink set of the invention in the inkjet-recording apparatus constituted as above is described below. Furthermore, aggregation reaction mechanism of an ink in the invention is described in the description of the recording method.

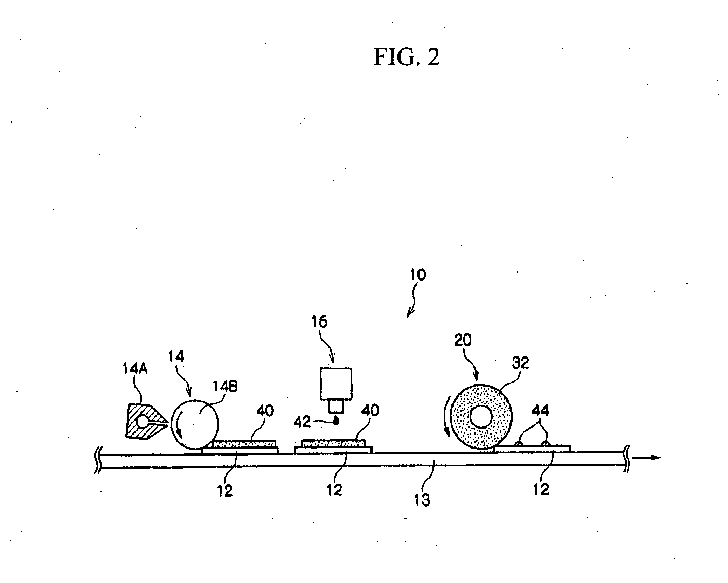

Fig. 2 is a conceptual view showing only the necessary part for explaining the invention in the inkjet-recording apparatus shown in Fig. 1, and in Fig. 2 a treating liquid is applied to an intermediate transfer body by a coating method, and the intermediate transfer body in conveyed with a conveyer belt 13. However the invention is not limited thereto.

In Fig 2, a treating liquid 40 discharged from a coating head 14A is supplied to a coating roller 14B, and applied so as to form a thin layer onto the intermediate transfer body 12 through the coating roller 14B (treating liquid applying step).
The intermediate transfer body 12 on which the treating liquid 40 have been applied is conveyed to a position of a recording head 16 by a conveyer belt 13, and an ink 42 of the invention is ejected on the intermediate transfer body, thereby contacting the treating liquid 40 and the ink 42. By this, water-insoluble colored particles (A) and water-insoluble particles (B) in the ink rapidly aggregate to form an aggregate 44 (aggregation step). The aggregation is generated by decrease in dispersion stability of the water-insoluble particles (B) due to the change in pH environment.

In the above, an embodiment is described by reference to an example in which the ink set of the invention is applied to a transfer type inkjet-recording method, but the ink set can be applied to a recording method of directly recording a image to a recording medium.
In such a case, aggregation of an ink can also rapidly be conducted.

### EXAMPLES

Examples using the ink set of the invention including the ink and the treating liquid are described below, but the invention is not construed as being limited to those Examples. Unless otherwise indicated, "part" and "%" are "part by mass" and "% by mass" respectively.

### [Preparation of water-insoluble particle (B)]

### <Synthesis Example 1>

21.4 g of a carboxylate emulsifier (trade name: LATEMUL ASK, manufactured by Kao Corporation), 0.4 g of 1 mol/liter sodium hydroxide aqueous solution and 0.3 g of 2,2'-azobis(2-amidinopropane)dihydrochloride were added to 125 g of water, and uniformly dissolved therein. The resulting solution was heated to 70°C, and a mixture of 33 g of styrene and 27 g of butyl acrylate was added to the solution over 2 hours in nitrogen stream.
The resulting mixture was heated at 70°C for 2 hours and then at 80°C for 3 hours to obtain latex PL-02A that is milky white and has high transparency, as a dispersion of water-insoluble particles (B). The latex PL-02A thus obtained had a pH of 9.1, a solid content concentration of 34% by weight, an average particle diameter of 40 µm (light scattering method), Tg of 10°C, and polymer acid value of 0 (calculated value).

### <Synthesis Example 2>

Latexes PL-02B, PL-02C, PL-20, PL-06A, PL-06B and PL-03 were obtained in the same manner as in Synthesis Example 1 except that monomer mixtures shown in Table 1 were used in place of 33 g of styrene and 27 g of butyl acrylate, respectively. Properties of the latexes PL-02B, PL-02C, PL-20, PL-06A, PL-06B and PL-03 obtained are shown in Table 1.

### <Synthesis Example 3>

21.4 g of a carboxylate emulsifier (trade name: LATEMUL ASK, manufactured by Kao Corporation), 6 g of 5 mol/liter sodium hydroxide aqueous solution and 0.3 g of 2,2'-azobis(2-amidinopropane)dihydrochloride were added to 120 g of water, and uniformly dissolved therein. The resulting solution was heated to 70°C, and a monomer mixture of 41.4 g of styrene, 13.8 g of butyl acrylate and 4.8 g of acrylic acid was added to the solution over 2 hours in nitrogen stream. The resulting mixture was heated at 70°C for 2 hours and then at 80°C for 3 hours. The mixture was cooled to a room temperature, and 1 mol/liter sodium hydroxide aqueous solution was added to the solution while stirring such that the pH becomes about 9, thereby obtaining latex PL-04A. Properties of the latex PL-04A are shown in Table 1.

### <Synthesis Example 4>

Latex PL-04B was obtained in the same manner as in Synthesis Example 3 except that a monomer mixture shown in Table 1 was used in place of the monomer mixture of 41.4 g of styrene, 13.8 g of butyl acrylate and 4.8 g of acrylic acid. Properties of the latex PL-04B are shown in Table 1.

### <Synthesis Example 5>

21.4 g of a carboxylate emulsifier (trade name: LATEMUL ASK, manufactured by Kao Corporation), 2 g of 1 mol/liter sodium hydroxide aqueous solution and 0.12 g of ammonium persulfate were added to 119 g of water, and uniformly dissolved therein. The resulting solution was heated to 70°C, and a mixture of 33 g of styrene and 27 g of butyl acrylate was added to the solution over 2 hours in nitrogen stream. The resulting solution was heated at 70°C for 2 hours, and a solution of 0.06 g of ammonium persulfate dissolved in 5 g of water was added to the solution, followed by heating at 80°C for 3 hours. The resulting solution was cooled to room temperature, and 1 mol/liter sodium hydroxide aqueous solution was added to the solution while stirring such that the pH becomes about 9, thereby obtaining latex PL-02D. Properties of the latex PL-02D are shown in Table 1.

### <Synthesis Example 6>

2.4 g of a sulfonate surfactant (trade name: PYONINE A-43S, manufactured by Takemoto Oil & Fat Co., Ltd.), 0.4 g of 1 mol/liter sodium hydroxide aqueous solution and 0.3 g of 2,2'-azobis(2-amidinopropane)dihydrochloride were added to 144 g of water, and uniformly dissolved therein. The resulting solution was heated to 70°C, and a mixture of 45 g of styrene and 15 g of butyl acrylate was added to the solution over 2 hours in nitrogen stream. The resulting solution was heated at 70°C for 2 hours and then at 80°C for 3 hours, thereby obtaining latex PL-02C-H. Properties of the latex PL-02C-H are shown in Table 1.

**TABLE 1**

| Water-insoluble particles (B) | Monomer mixture | Emulsifier | pH | Solid content (%) | Particle diameter (nm) | Tg (°C) | Polymer acid value |
|---|---|---|---|---|---|---|---|
| PL-02A | S 33 g, BA 27 g | C | 9.1 | 34 | 40 | 10 | 0 |
| PL-02B | S 36 g, BA 24 g | C | 9.0 | 33 | 42 | 15 | 0 |
| PL-02C | S 45 g, BA 15 g | C | 9.1 | 34 | 43 | 45 | 0 |
| PL-20 | S 39 g, BMA 21 g | C | 9.2 | 33 | 45 | 70 | 0 |
| PL-06A | S 48 g, tBMA 12 g | C | 9.1 | 34 | 55 | 98 | 0 |
| PL-06B | S 30 g,tBMA 30 g | C | 9.1 | 34 | 59 | 105 | 0 |
| PL-03 | S 41 g, BA 13 g,AE 6 g | C | 9.2 | 34 | 43 | 42 | 0 |
| PL-04A | S 41.4 g, BA 13.8 g, AA 4.8 g | C | 8.6 | 32 | 120 | 52 | 62 |
| PL-04B | S 40.7 g, BA 13.6 g, AA 3.5 g | C | 8.7 | 33 | 125 | 48 | 45 |
| PL-02D | S45 g, BA 15 g | C | 9.1 | 30 | 50 | 45 | 0 |
| PL-02C-H | S 45 g, BA 15 g | S | 8.5 | 33 | 72 | 47 | 0 |

| | | | | | | | |
|---|---|---|---|---|---|---|---|
| Abbreviation of monomer S: Styrene, BA: Butyl acrylate, BMA: Butyl methacrylate, tBMA: t-Butyl methacrylate AE: Dimethylaminoethyl methacrylate, AA: Acrylic acid Abbreviation of emulsifier C: Carboxylate type, S: Sulfonate type | | | | | | | |

In Table 1, particle diameter is an average particle diameter, and shows a value measured by the conventional method using a particle size analyzer (trade name: MICROTRACK UPA EX-150, manufactured by Nikkiso Co., Ltd.).

### [Preparation of water-based ink composition]

### <<Preparation of cyan ink C1-1>>

### (Preparation of cyan dispersion)

A mixed solution of 6 parts by mass of styrene, 11 parts by mass of stearyl methacrylate, 4 parts by mass of a styrene macromer (trade name: AS-6, manufactured by Toagosei Co., Ltd.), 5 parts by mass of polypropylene glycol methacrylate (trade name: BLENMER PP-500, manufactured by NOF Corporation), 5 parts by mass of methacrylic acid, 0.05 part by mass of 2-mercaptoethanol and 24 parts by mass of methyl ethyl ketone was prepared in a reaction vessel.
On the other hand, a mixture solution of 14 parts by mass of styrene, 24 parts by mass of stearyl methacrylate, 9 parts by mass of a styrene macromer (trade name: AS-6, manufactured by Toagosei Co., Ltd.), 9 parts by mass of polypropylene glycol methacrylate (trade name: BLENMER PP-500, manufactured by NOF Corporation), 10 parts by mass of methacrylic acid, 0.13 part by mass of 2-mercaptoethanol, 56 parts by mass of methyl ethyl ketone, and 1.2 parts by mass of 2,2'-azobis(2,4-dimethylvaleronitrile) was prepared, and placed in a dropping funnel.

The mixed solution in the reaction vessel was heated to 75°C in nitrogen atmosphere while being stirred, and the mixed solution in the dropping funnel was gradually added dropwise to the reaction vessel over 1 hour. Two hours later from completion of the addition, a solution of 1.2 parts by mass of 2,2'-azobis(2,4-dimethylvaleronitrile) dissolved in 12 parts by mass of methyl ethyl ketone was added dropwise to the reaction vessel over 3 hours. The resulting solution was heated at 75°C for 2 hours and then at 80°C for 2 hours to obtain a polymer dispersant solution.

With respect to a part of the polymer dispersant solution, a solid content was isolated by removing a solvent, and the solid obtained was diluted to 0.1% by mass with tetrahydrofuran. A weight average molecular weight was measured using three columns of TSKgeL Super HZM-H, TSKgeL Super HZ4000 and TSKgeL Super HZ2000 (trade name: manufactured by Tosoh Corporation) connected in series by high speed GPC (Gel Permeation Chromatography) HLC-8220GPC (trade name). As a result, the solid thus isolated had a weight average molecular weight of 25,000 in terms of polystyrene conversion.

5.0 g in terms of solid content conversion of the polymer dispersant solution thus obtained, 10.0 g of cyan pigment blue 15:3 (manufactured by Dainichiseika Color & Chemicals Mfg. Co., Ltd.), 40.0 g of methyl ethyl ketone, 8.0 g of 1 mol/liter sodium hydroxide, 82.0 g of ion-exchanged water and 300 g of 0.1 mm zirconia beads were supplied to a vessel, and dispersed with a ready-mill disperser (manufactured by AIMEX Co., Ltd.) at 1,000 rpm for 6 hours. The dispersion thus obtained was vacuum concentrated with an evaporator until methyl ethyl ketone can sufficiently be distilled away, and concentrated until a pigment concentration is 10%, thereby preparing a cyan dispersion C 1 as a dispersion of water-insoluble colored particles (A). The cyan dispersion C1 thus obtained had an average particle diameter of 77 nm.

An ink was prepared so as to have the following ink composition using the cyan dispersion C1 as the dispersion of water-insoluble colored particles (A) and PL-02A as the dispersion of water-insoluble particles (B). After the preparation, coarse particles were removed with a 5 µm filter to prepare ink C1-1 as a water-based ink composition.

### <Ink composition of cyan ink C1-1>

| | |
|---|---|
| • Cyan pigment (pigment blue 15:3), manufactured by Dainichiseika Color & Chemicals Mfg. Co., Ltd. | 4% by mass |
| • Polymer dispersant | 2% by mass |
| • PL-02A (solid content conversion) | 8% by mass |
| • Diethylene glycol (manufactured by Wako Pure Chemical Industries, Ltd. | 10% by mass |
| • Glycerin | 20% by mass |
| • Ethylene oxide (10 moles) adduct of acetylene diol (trade name: OLFINE E1010, Nissin Chemical Industry Co., Ltd.) | 1% by mass |
| • Ion-exchange water | To make 100% by mass in total |

### «Preparation of cyan inks C1-2 to 10, C1-H1 and C1-H2»

Inks C1-2 toC1-10, C1-H1 and C1-H2 having the ink compositions as shown in Table 2 respectively were prepared in the same manner as in the preparation of ink C1-1 except that latexes shown in Table 2 were used in place of latex PL-02A, respectively.

### <<Preparation of magenta ink M1-1>>

400 g of a magenta pigment (trade name: CROMOPHTAL JET MAGENTA DMQ, manufactured by Ciba Specialty Chemicals), 40 g of sodium oleate (manufactured by Wako Pure Chemical Industries, Ltd.), 200 g of glycerin (manufactured by Wako Pure Chemical Industries, Ltd.) and 1,360 g of ion-exchanged water were kneaded in mortar for 1 hour. The resulting mixture was subjected to coarse dispersion with a small stirrer-equipped ultrasonic disperser US-600CCVP (trade name) manufactured by Nippon Seiki Co., Ltd., (600W, ultrasonic oscillation portion 50 mm) for 20 minutes.
The coarse dispersion and 1.3 kg of 0.05 mm zirconia beads were supplied to a SUPER APEX MILL (trade name, Model SAM-1, manufactured by Kotobuki Engineering & Manufacturing Co., Ltd.), and dispersion was carried out at the number of revolution of 2,500 rpm in a treating flow rate of 15 liters/hour for 160 minutes. After completion of the dispersion, the resulting dispersion was filtered with a 32 µm filter fabric to obtain a 20% by mass magenta pigment dispersion. By this, magenta dispersion M1 as a dispersion of water-insoluble fine particles A was obtained. The magenta dispersion thus obtained had an average particle diameter of 71 nm.
Using the magenta dispersion M1 as the dispersion of water-insoluble colored particles (A) and the latex PL-02C as the dispersion of water-insoluble particles (B), an ink was prepared so as to have the following ink composition. After the preparation, coarse particles were removed from the ink with 5 µm filter to prepare ink M1-1 as a water-based ink composition.

### <Ink composition of magenta ink M1-1>

| | |
|---|---|
| • Magenta pigment (trade name: CROMOPHTAL JET MAGENTA DMQ, manufactured by Ciba Specialty Chemicals) | 4% by mass |
| • Sodium oleate (dispersant) | 0.4% by mass |
| • PL-02C (solid content conversion) | 8% by mass |
| • Diethylene glycol (manufactured by Wako Pure Chemical Industries, Ltd) | 10% by mass |
| • Glycerin (manufactured by Wako Pure Chemical Industries, Ltd) | 20% by mass |
| • Ethylene oxide (10 moles) adduct of acetylene diol (trade name: OLFINE E1010, Nissin Chemical Industry Co., Ltd.) | 1% by mass |
| • Ion-exchange water | To make 100% by mass in total |

### <<Preparation of magenta ink M1-H>>

Magenta ink M1-H having the following composition was prepared in the same manner as in the preparation of ink M1-1 except that PL-02C-H prepared using an emulsifier other than carboxylate type was used in place of PL-02C.

### <Ink composition of magenta ink M1-H>

| | |
|---|---|
| • Magenta pigment (trade name: CROMOPHTAL JET MAGENTA DMQ, manufactured by Ciba Specialty Chemicals) | 4% by mass |
| • Sodium oleate (dispersant) | 0.4% by mass |
| • PL-02C-H (solid content conversion) | 8% by mass |
| • Diethylene glycol (manufactured by Wako Pure Chemical Industries, Ltd) | 10% by mass |
| • Glycerin (manufactured by Wako Pure Chemical Industries, Ltd) | 20% by mass |
| • Ethylene oxide (10 moles) adduct of acetylene diol (trade name: OLFINE E1010, Nissin Chemical Industry Co., Ltd.) | 1% by mass |
| • Ion-exchange water | To make 100% by mass in total |

### [Preparation of treating liquid]

The following compositions were mixed to prepare treating liquid T-1.

### <Composition of treating liquid T-1>

| | |
|---|---|
| • 2-Pyrrolidone-5-carboxylic acid (manufactured by Tokyo Chemical Industry Co., Ltd.) | 10 parts by mass |
| • Lithium hydroxide monohydrate (manufactured by Wako Pure Chemical Industries, Ltd.) | 2 parts by mass |
| • Glycerin (manufactured by Wako Pure Chemical Industries, Ltd) | 13 parts by mass |
| • Diethylene glycol (manufactured by Wako Pure Chemical Industries, Ltd) | 10 parts by mass |
| • Ethylene oxide (10 moles) adduct of acetylene diol (trade name: OLFINE E1010, Nissin Chemical Industry Co., Ltd.) | 1.5 parts by mass |
| • Sodium 1,4-bis(1H,1H,2H,2H-perfluoroheptyloxycarbonyl)ethanesulfonate | 0.1 part by mass |
| • Ion-exchange water | To make 100% by mass in total |

As a result of measurement of property values of the treating liquid T-1 obtained, the treating liquid T-1 had a pH of 3.6, surface tension of 28.0 mN/m and viscosity of 3.1 mPa·s.

In the above, an average particle diameter was measured as follows. That is the dispersion to be measured was appropriately diluted to a concentration suitable for the measurement and the average particle diameter was measured with a particle size analyzer (trade name: MICROTRACK UPA EX-150, manufactured by Nikkiso Co., Ltd.) under the same measurement conditions. Specifically, a volume average particle diameter was measured under the following conditions.
Particle permeability: permeation
Particle refractive index: 1.51
Particle shape: nonspherical
Density: 1.2 g/cm³
Solvent: water
Cell temperature: 18 to 25°C
Surface tension was measured by the conventional method using a surface tension meter (trade name: CBVP-Z, manufactured by Kyowa Interface Science Co., Ltd.), and viscosity was measured by the conventional method using DV-II+VISCOMETER (trade name, manufactured by BROOKFIELD).

**TABLE 2**

| Ink No. | Water-insolub le particles | pH | Surface tension | Viscosity (mPa·s) | Particle diameter (nm) | Remarks |
|---|---|---|---|---|---|---|
| | (B) | | (mN/m) | | | |
| C1-1 | PL-02A | 9.0 | 35.2 | 6.8 | 80 | Invention |
| C1-2 | PL-02B | 9.1 | 34.2 | 6.8 | 83 | Invention |
| C1-3 | PL-02C | 9.0 | 35.1 | 6.8 | 83 | Invention |
| C1-4 | PL-20 | 9.0 | 34.8 | 6.8 | 84 | Invention |
| C1-5 | PL-06A | 9.2 | 34.8 | 6.6 | 94 | Invention |
| C1-6 | PL-06B | 9.0 | 34.9 | 6.5 | 96 | Invention |
| C1-7 | PL-03 | 9.1 | 34.5 | 6.9 | 84 | Invention |
| C1-8 | PL-04A | 8.9 | 33.5 | 6.2 | 110 | Invention |
| C1-9 | PL-04B | 8.9 | 33.8 | 6.2 | 115 | Invention |
| C1-10 | PL-02D | 9.1 | 34.1 | 6.6 | 92 | Invention |
| C1-H1 | PL-02C-H | 8.8 | 34.2 | 6.6 | 95 | Comparative |
| C1-H2 | S-free | 9.1 | 37.2 | 6.1 | 70 | Comparative |
| M1-1 | PL-02C | 8.2 | 31.4 | 5.7 | 70 | Invention |
| M1-H | PL-02C-H | 8.7 | 32.5 | 5.3 | 65 | Comparative |

| | | | | | | |
|---|---|---|---|---|---|---|
| S-free: JURYMER ET-410 (soap-free latex, manufactured by Nihon Junyaku Co., Ltd.) | | | | | | |

### [Stability-over-time test of ink, image formation test, image transfer test and droplet ejection stability test]

The stability-over-time test of ink, image formation test and the like were conducted on each ink prepared above. The stability-over-time test of an ink is to evaluate stability of particle diameter and viscosity of an ink before ejecting the ink, that is, the stability of particle diameter and viscosity of the ink that is stored in an ink storage tank (or cartridge). When the stability is poor, the problem arises that droplet ejection nozzle is clogged when discharging an ink from an ejection nozzle of an inkjet apparatus.
Furthermore, aggregation reaction speed until aggregating after ejecting an ink and a treating liquid to contact with each other was examined by the image formation test.

### (Stability-over-time test of ink)

10 ml of an ink was put in a 15 ml glass bottle and the bottle was sealed. The ink was allowed to stand at 60°C for 14 days, and an average particle diameter and viscosity were measured.
The evaluation criteria are as follows.
A: No substantial changes in particle size/viscosity
B: Slight changes in particle size/viscosity
C: Great changes in particle size/ viscosity
The evaluation C was judged to be impossible to use. The results obtained are shown in Table 3.

### (Image formation test)

The image formation test was conducted as follows. A treating liquid was applied onto an intermediate transfer body of silicone rubber sheet SR Series having a film thickness of 0.5 mm (manufactured by Tigers Polymer Corporation) by a wire bar coater (coating coater of wire bar method) such that a film thickness is about 5 µm. An ink was ejected on the intermediate transfer body using a printer head of GELJET G717 (trade name, manufactured by Ricoh Company, Ltd.) such that resolution is 1,200x600 dpi, and an ink droplet ejection amount is 12 pL. At the time points of 1 second, 2 seconds, 10 seconds and 15 seconds after ejecting ink droplets, a solvent was removed with a solvent removal roller having a wiper KEI DRY (trade name, manufactured by Crecia Co., Ltd.) wounded thereon. The aggregation reaction speed was evaluated by observing deposition of a colorant to the wiper KEI DRY.

The image formation test results are shown in Table 3. The evaluation criteria of deposition of colorant to the wiper KEY DRY in the image formation test of Table 3 is as follows. The results shown in Table 3 are the evaluation results of the deposition of colorant to the wiper KEY DRY at the time point of 15 seconds after the ink droplet ejection.
A: Deposition of colorant is not observed.
AB: Slight amount of deposition of colorant is observed.
B: A small amount of deposition of colorant is observed.
C: Large amount of deposition of colorant is observed.
The evaluation C was judged that the aggregation reaction does not complete.

### (Image transfer test)

The image transfer test was conducted as follows. A piece of art paper was placed on an image formed on the intermediate transfer body, after the image formation test, and heated to 100°C for 1 minute. Deposition of an image on the art paper after being removed from the intermediate transfer body was observed to evaluate image transfer. The results of image transfer are shown in Table 3. The evaluation criteria of the image transfer test in Table 3 are as follows.
A: Image is almost transferred.
B: Poor transfer is observed at a low level.
C: Many poor transfer portions are observed.
The evaluation C was judged to be impossible to use.

### (Droplet ejection stability test)

The droplet ejection stability test was conducted as follows. An ink is ejected onto the intermediate transfer body treated in the same manner as in the image formation test under the same conditions. Droplet ejection was continuously conducted, and the state after 5 hours was observed to evaluate droplet ejection stability. The results of the droplet ejection stability test are shown in Table 3. The evaluation criteria of the droplet ejection stability test are as follows.
A: No poor discharge, and no poor direction control.
AB: No poor discharge, but slight poor direction control.
B: Almost no poor discharge, but slight poor direction control.
C: High level of poor discharge.

**TABLE 3**

| Ink No. | Water-insoluble particles (B) | Time stability test of ink | | Ink formation test | Image transfer test | Drop ejection stability test | Remarks |
|---|---|---|---|---|---|---|---|
| | | Viscosity | Particle diameter | | | | |
| C1-1 | PL-02A | A | A | A | A | B | Invention |
| C1-2 | PL-02B | A | A | A | A | AB | Invention |
| C1-3 | PL-02C | A | A | A | A | A | Invention |
| C1-4 | PL-20 | A | A | A | A | A | Invention |
| C1-5 | PL-06A | A | A | A | A | A | Invention |
| C1-6 | PL-06B | A | A | A | B | A | Invention |
| C1-7 | PL-03 | A | A | A | A | A | Invention |
| C1-8 | PL-04A | A | A | B | A | A | Invention |
| C1-9 | PL-04B | A | A | AB | A | A | Invention |
| C1-10 | PL-02D | A | A | AB | A | A | Invention |
| C1-H1 | PL-02C-H | A | A | C | (Impossible to evaluate) | A | Comparative |
| C1-H2 | S-free | A | A | AB | A | C | Comparative |
| M1-1 | PL-02C | A | A | A | A | A | Invention |
| M1-H | PL-02C-H | A | A | C | (Impossible to evaluate) | A | Comparative |

| | | | | | | | |
|---|---|---|---|---|---|---|---|
| S-free: JURYMER ET-410 (soap-free latex, manufactured by Nihon Junyaku Co., Ltd.) | | | | | | | |

It could be confirmed from Table 3 that the stability over time of the ink of the invention is equivalent to the stability over time of the conventional ink.
Furthermore, it is found that inks C1-H1 and M1-H of the Comparative Examples using latex PL-02C-H which uses a surfactant other than a carboxylate type as an emulsifier is remarkably poor in image formation.

It is found that the inks of the invention are all excellent in image transferability.
Furthermore, in the droplet ejection stability test, in the case of the ink using a soap-free latex as the water-insoluble particles (B), the droplet ejection stability was less than the allowable range. The reason for this could be considered that, for example, a polymer component having relatively small molecular weight is dissolved in an ink.

### <10> An image recording method, comprising:

According to the invention, it is possible to provide an ink set having an extremely rapid aggregation reaction speed and, further, to provide an image recording method using the ink set.

## Claims

1. An image recording method comprising the steps of:
applying a treating liquid having a pH of 1 to 6 onto a recording medium; and
applying a water-based ink composition comprising water-insoluble coloured particles (A), water-insoluble particles (B) comprising a water-insoluble polymer and an emulsifier containing a carboxylate group, and a pH regulator (C) in an amount such that the water-based ink composition has a pH of from 6 to 10 onto the recording medium to which the treating liquid has been applied, the treating liquid changing the pH of the water-based ink composition causing the water-insoluble coloured particles (A) and the water-insoluble particles (B) to aggregate to form an image on the recording medium,
wherein the water-insoluble particles (B) are obtained by emulsion polymerization using monomers and a carboxylate emulsifier in an amount of from 1 to 50% by mass, based on the mass of the whole monomers which are used as constituent components of the water-insoluble polymer, and the treating liquid is different from the water-based ink composition, and the carboxylate emulsifier is a tallowate soap, a coconut oil fatty acid soap, a rosin soap, a purified fatty acid soap of stearate or oleate, an alkenyl succinate or a N-acylsarcosinate.

2. An image recording method according to Claim 1, further comprising removing at least a part of a solvent of at least one of the water-based ink composition or the treating liquid after applying the water-based ink composition to the recording medium.

3. An image recording method according to Claim 1 or Claim 2, wherein the water-based ink composition is applied to the recording medium by an inkjet method.

4. An image recording method comprising the sequential steps of:
applying a treating liquid having a pH of 1 to 6 onto an intermediate transfer body;
applying a water-based ink composition comprising water-insoluble coloured particles (A); water-insoluble particles (B) comprising a water-insoluble polymer and an emulsifier containing a carboxylate group, and a pH regulator (C) in an amount such that the water-based ink composition has a pH of from 6 to 10 onto the intermediate transfer body, the treating liquid changing the pH of the water-based ink composition causing the water-insoluble coloured particles (A) and the water-insoluble particles (B) to aggregate to form an image on the intermediate transfer body;
removing at least a part of a solvent of at least one of the water-based ink composition and the treating liquid from the intermediate transfer body; and
transferring the image formed on the intermediate transfer member to a recording medium,
wherein the water-insoluble particles (B) are obtained by emulsion polymerization using monomers and a carboxylate emulsifier in an amount of from 1 to 50% by mass, based on the mass of the whole monomers which are used as constituent components of the water-insoluble polymer, and the treating liquid is different from the water-based ink composition, and the carboxylate emulsifier is a tallowate soap, a coconut oil fatty acid soap, a rosin soap, a purified fatty acid soap of stearate or oleate, an alkenyl succinate or a N-acylsarcosinate.

5. An image recording method according to Claim 4, wherein the water-based ink composition is applied to the intermediate transfer body by an inkjet method.

6. An image recording method according to any preceding claim, wherein the emulsifier containing a carboxylate group is adhered to the surface of the water-insoluble polymer.

7. An image recording method according to any preceding claim, wherein the treating liquid contains at least one acidic compound having a phosphoric acid group, a phosphonic acid group, a phosphinic acid group, a sulphuric acid group, a sulfonic acid group, a sulfinic acid group, or a carboxyl group, or a salt thereof.

8. An image recording method according to Claim 1 or Claim 4, wherein the pH regulator (C) is included in the water-based ink composition in an amount such that the pH of the latter is from 7 to 10.

9. An image recording method according to Claim 1, wherein the carboxylate emulsifier is an alkenyl succinate.

10. An ink set comprising:
a water-based ink composition comprising water-insoluble coloured particles (A), water-insoluble particles (B) comprising a water-insoluble polymer and an emulsifier containing a carboxylate group, and a pH regulator (C) in an amount such that the water-based ink composition has a pH of from 6 to 10, and
a treating liquid having a pH of 1 to 6, the treating liquid changing the pH of the water-based ink composition thereby causing the water-insoluble coloured particles (A) and the water insoluble particles (B) to aggregate to form an image on a recording medium,
wherein the water-insoluble particles (B) are obtained by emulsion polymerization using monomers and a carboxylate emulsifier in an amount of from 1 to 50% by mass, based on the mass of the whole monomers which are used as constituent components of the water-insoluble polymer, and the treating liquid is different from the water-based ink composition, and the carboxylate emulsifier is a tallowate soap, a coconut oil fatty acid soap, a rosin soap, a purified fatty acid soap of stearate or oleate, an alkenyl succinate or a N-acylsarcosinate.

11. An ink set according to Claim 10, wherein the emulsifier containing a carboxylate group is adhered to the surface of the water-insoluble polymer.

12. An ink set according to Claim 10 or Claim 11, wherein the treating liquid contains at least one acidic compound having a phosphoric acid group, a phosphonic acid group, a phosphinic acid group, a sulphuric acid group, a sulfonic acid group, a sulfinic acid group, or a carboxyl group, or a salt thereof.

13. An ink set according to Claim 10, wherein the pH regulator (C) is included in the water-based ink composition in an amount such that the pH of the latter is from 7 to 10.

## Patentansprüche

1. Bildaufzeichnungsverfahren, umfassend die Schritte:
Aufbringen einer Behandlungsflüssigkeit mit einem pH-Wert von 1 bis 6 auf ein Aufzeichnungsmedium; und
Aufbringen einer auf Wasser basierenden Tintenzusammensetzung, umfassend wasserunlösliche gefärbte Partikel (A), wasserunlösliche Partikel (B), die ein wasserunlösliches Polymer und einen Emulgator, der eine Carboxylatgruppe enthält, umfassen, und einen pH-Regulator (C) in einer solchen Menge, dass die auf Wasser basierende Tintenzusammensetzung einen pH-Wert von 6 bis 10 aufweist, auf das Aufzeichnungsmedium, auf das die Behandlungsflüssigkeit aufgebracht worden ist, wobei die Behandlungsflüssigkeit den pH-Wert der auf Wasser basierenden Tintenzusammensetzung verändert, wodurch die wasserunlöslichen gefärbten Partikel (A) und die wasserunlöslichen Partikel (B) aggregieren, um auf dem Aufzeichnungsmedium ein Bild zu bilden,
wobei die wasserunlöslichen Partikel (B) durch Emulsionspolymerisation unter Verwendung von Monomeren und einem Carboxylat-Emulgator in einer Menge von 1 bis 50 Masse-%, in bezug auf die Masse der gesamten Monomere, die als Bestandteilskomponenten für das wasserunlösliche Polymer verwendet werden, erhalten sind und die Behandlungsflüssigkeit von der auf Wasser basierenden Tintenzusammensetzung verschieden ist und wobei der Carboxylat-Emulgator eine Tallowat-Seife, eine Kokosöl-Fettsäure-Seife, eine Harzseife, eine gereinigte Fettsäureseife von Stearat oder Oleat, ein Alkenylsuccinat oder ein N-Arylsarcosinat ist.

2. Bildaufzeichnungsverfahren gemäss Anspruch 1, das ferner das Entfernen von mindestens einem Teil eines Lösungsmittels von zumindest einem der auf Wasser basierenden Tintenzusammensetzung oder der Behandlungsflüssigkeit nach dem Aufbringen der auf Wasser basierenden Tintenzusammensetzung auf das Aufzeichnungsmedium umfasst.

3. Bildaufzeichnungsverfahren gemäss Anspruch 1 oder Anspruch 2, wobei die auf Wasser basierende Tintenzusammensetzung durch ein Tintenstrahlverfahren auf das Aufzeichnungsmedium aufgebracht wird.

4. Bildaufzeichnungsverfahren, umfassend die aufeinanderfolgenden Schritte:
Aufbringen einer Behandlungsflüssigkeit mit einem pH-Wert von 1 bis 6 auf einen Zwischenübertragungskörper; und
Aufbringen einer auf Wasser basierenden Tintenzusammensetzung, umfassend wasserunlösliche gefärbte Partikel (A), wasserunlösliche Partikel (B), die ein wasserunlösliches Polymer und einen Emulgator, der eine Carboxylatgruppe enthält, umfassen, und einen pH-Regulator (C) in einer solchen Menge, dass die auf Wasser basierende Tintenzusammensetzung einen pH-Wert von 6 bis 10 aufweist, auf den Zwischenübertragungskörper, wobei die Behandlungsflüssigkeit den pH-Wert der auf Wasser basierenden Tintenzusammensetzung verändert, wodurch die wasserunlöslichen gefärbten Partikel (A) und die wasserunlöslichen Partikel (B) aggregieren, um auf dem Zwischenübertragungskörper ein Bild zu bilden;
Entfernen von mindestens einem Teil eines Lösungsmittels von zumindest einem der auf Wasser basierenden Tintenzusammensetzung und der Behandlungsflüssigkeit von dem Zwischenübertragungskörper; und
Übertragen des auf dem Zwischenübertragungselement gebildeten Bildes auf ein Aufzeichnungsmedium,
wobei die wasserunlöslichen Partikel (B) durch Emulsionspolymerisation unter Verwendung von Monomeren und einem Carboxylat-Emulgator in einer Menge von 1 bis 50 Masse-%, in bezug auf die Masse der gesamten Monomere, die als Bestandteilskomponenten für das wasserunlösliche Polymer verwendet werden, erhalten sind und die Behandlungsflüssigkeit von der auf Wasser basierenden Tintenzusammensetzung verschieden ist, und wobei der Carboxylat-Emulgator eine Tallowat-Seife, eine Kokosöl-Fettsäure-Seife, eine Harzseife, eine gereinigte Fettsäureseife von Stearat oder Oleat, ein Alkenylsuccinat oder ein N-Arylsarcosinat ist.

5. Bildaufzeichnungsverfahren gemäss Anspruch 4, wobei die auf Wasser basierende Tintenzusammensetzung durch ein Tintenstrahlverfahren auf den Zwischenübertragungskörper aufgebracht wird.

6. Bildaufzeichnungsverfahren gemäss einem der vorhergehenden Ansprüche, wobei der eine Carboxylatgruppe enthaltende Emulgator an die Oberfläche des wasserunlöslichen Polymers anhaftet.

7. Bildaufzeichnungsverfahren gemäss einem der vorhergehenden Ansprüche, wobei die Behandlungsflüssigkeit zumindest eine saure Verbindung mit einer Phosphorsäuregruppe, einer Phosphonsäuregruppe, einer Phosphinsäuregruppe, einer Schwefelsäuregruppe, einer Sulfonsäuregruppe, einer Sulfinsäuregruppe oder einer Carboxylgruppe oder ein Salz davon enthält.

8. Bildaufzeichnungsverfahren gemäss Anspruch 1 oder Anspruch 4, wobei der pH-Regulator (C) in einer solchen Menge in der auf Wasser basierenden Tintenzusammensetzung enthalten ist, dass der pH-Wert der letzteren 7 bis 10 beträgt.

9. Bildaufzeichnungsverfahren gemäss Anspruch 1, wobei der Carboxylat-Emulgator ein Alkenylsuccinat ist.

10. Tintenset, umfassend:
eine auf Wasser basierende Tintenzusammensetzung, umfassend wasserunlösliche gefärbte Partikel (A), wasserunlösliche Partikel (B), die ein wasserunlösliches Polymer und einen Emulgator, der eine Carboxylatgruppe enthält, umfassen, und einen pH-Regulator (C) in einer solchen Menge, dass die auf Wasser basierende Tintenzusammensetzung einen pH-Wert von 6 bis 10 aufweist, und
eine Behandlungsflüssigkeit mit einem pH-Wert von 1 bis 6, wobei die Behandlungsflüssigkeit den pH-Wert der auf Wasser basierenden Tintenzusammensetzung verändert, wodurch die wasserunlöslichen gefärbten Partikel (A) und die wasserunlöslichen Partikel (B) aggregieren, um auf dem Aufzeichnungsmedium ein Bild zu bilden,
wobei die wasserunlöslichen Partikel (B) durch Emulsionspolymerisation unter Verwendung von Monomeren und einem Carboxylat-Emulgator in einer Menge von 1 bis 50 Masse-%, in bezug auf die Masse der gesamten Monomere, die als Bestandteilskomponenten für das wasserunlösliche Polymer verwendet werden, erhalten sind und die Behandlungsflüssigkeit von der auf Wasser basierenden Tintenzusammensetzung verschieden ist, und wobei der Carboxylat-Emulgator eine Tallowat-Seife, eine Kokosöl-Fettsäure-Seife, eine Harzseife, eine gereinigte Fettsäureseife von Stearat oder Oleat, ein Alkenylsuccinat oder ein N-Arylsarcosinat ist.

11. Tintenset gemäss Anspruch 10, wobei der eine Carboxylatgruppe enthaltende Emulgator an die Oberfläche des wasserunlöslichen Polymers anhaftet.

12. Tintenset gemäss Anspruch 10 oder Anspruch 11, wobei die Behandlungsflüssigkeit zumindest eine saure Verbindung mit einer Phosphorsäuregruppe, einer Phosphonsäuregruppe, einer Phosphinsäuregruppe, einer Schwefelsäuregruppe, einer Sulfonsäuregruppe, einer Sulfinsäuregruppe oder einer Carboxylgruppe oder ein Salz davon enthält.

13. Tintenset gemäss Anspruch 10, wobei der pH-Regulator (C) in einer solchen Menge in der auf Wasser basierenden Tintenzusammensetzung enthalten ist, dass der pH-Wert der letzteren 7 bis 10 beträgt.

## Revendications

1. Procédé d'enregistrement d'image comprenant les étapes consistant à :
appliquer un liquide de traitement ayant un pH de 1 à 6 sur un support d'enregistrement ; et
appliquer une composition d'encre aqueuse comprenant des particules colorées insolubles dans l'eau (A), des particules insolubles dans l'eau (B) comprenant un polymère insoluble dans l'eau et un émulsionnant contenant un groupe carboxylate, et un régulateur de pH (C) en une quantité telle que la composition d'encre aqueuse ait un pH de 6 à 10 sur le support d'enregistrement auquel le liquide de traitement a été appliqué, le liquide de traitement changeant le pH de la composition d'encre aqueuse en provoquant l'agrégation des particules colorées insolubles dans l'eau (A) et des particules insolubles dans l'eau (B) de manière qu'une image se forme sur le support d'enregistrement,
dans lequel les particules insolubles dans l'eau (B) sont obtenues par polymérisation en émulsion utilisant des monomères et un émulsionnant carboxylate en une quantité de 1 à 50 % en masse, par rapport à la masse de tous les monomères utilisés en tant que composants constitutifs du polymère insoluble dans l'eau, et le liquide de traitement est différent de la composition d'encre aqueuse, et l'émulsionnant carboxylate est un savon de (suif-yl)ate, un savon d'acide gras dérivé de l'huile de coco, un savon de colophane, un savon d'acide gras purifié de stéarate ou d'oléate, un alcénylsuccinate ou un N-acylsarcosinate.

2. Procédé d'enregistrement d'image selon la revendication 1, comprenant en outre l'élimination d'au moins une partie d'un solvant d'au moins l'un parmi la composition d'encre aqueuse et le liquide de traitement après application de la composition d'encre aqueuse au support d'enregistrement.

3. Procédé d'enregistrement d'image selon la revendication 1 ou la revendication 2, dans lequel la composition d'encre aqueuse est appliquée au support d'enregistrement par un procédé à jet d'encre.

4. Procédé d'enregistrement d'image comprenant les étapes successives consistant à :
appliquer un liquide de traitement ayant un pH de 1 à 6 sur un corps de transfert intermédiaire ;
appliquer une composition d'encre aqueuse comprenant des particules colorées insolubles dans l'eau (A), des particules insolubles dans l'eau (B) comprenant un polymère insoluble dans l'eau et un émulsionnant contenant un groupe carboxylate, et un régulateur de pH (C) en une quantité telle que la composition d'encre aqueuse ait un pH de 6 à 10 sur le corps de transfert intermédiaire, le liquide de traitement changeant le pH de la composition d'encre aqueuse en provoquant l'agrégation des particules colorées insolubles dans l'eau (A) et des particules insolubles dans l'eau (B) de manière qu'une image se forme sur le corps de transfert intermédiaire ;
éliminer du corps de transfert intermédiaire au moins une partie du solvant d'au moins l'un parmi la composition d'encre aqueuse et le liquide de traitement ; et
transférer à un support d'enregistrement l'image formée sur le corps de transfert intermédiaire,
dans lequel les particules insolubles dans l'eau (B) sont obtenues par polymérisation en émulsion utilisant des monomères et un émulsionnant carboxylate en une quantité de 1 à 50 % en masse, par rapport à la masse de tous les monomères utilisés en tant que composants constitutifs du polymère insoluble dans l'eau, et le liquide de traitement est différent de la composition d'encre aqueuse, et l'émulsionnant carboxylate est un savon de (suif-yl)ate, un savon d'acide gras dérivé de l'huile de coco, un savon de colophane, un savon d'acide gras purifié de stéarate ou d'oléate, un alcénylsuccinate ou un N-acylsarcosinate.

5. Procédé d'enregistrement d'image selon la revendication 4, dans lequel la composition d'encre aqueuse est appliquée au corps de transfert intermédiaire par un procédé à jet d'encre.

6. Procédé d'enregistrement d'image selon l'une quelconque des revendications précédentes, dans lequel l'émulsionnant contenant un groupe carboxylate adhère à la surface du polymère insoluble dans l'eau.

7. Procédé d'enregistrement d'image selon l'une quelconque des revendications précédentes, dans lequel le liquide de traitement contient au moins un composé acide ayant un groupe acide phosphorique, un groupe acide phosphonique, un groupe acide phosphinique, un groupe acide sulfurique, un groupe acide sulfonique, un groupe acide sulfinique, ou un groupe carboxyle, ou un sel de celui-ci.

8. Procédé d'enregistrement d'image selon la revendication 1 ou la revendication 4, dans lequel le régulateur de pH (C) est incorporé dans la composition d'encre aqueuse en une quantité telle que le pH de cette dernière soit de 7 à 10.

9. Procédé d'enregistrement d'image selon la revendication 1, dans lequel l'émulsionnant carboxylate est un alcénylsuccinate.

10. Système d'encre comprenant :
une composition d'encre aqueuse comprenant des particules colorées insolubles dans l'eau (A), des particules insolubles dans l'eau (B) comprenant un polymère insoluble dans l'eau et un émulsionnant contenant un groupe carboxylate, et un régulateur de pH (C) en une quantité telle que la composition d'encre aqueuse ait un pH de 6 à 10, et
un liquide de traitement ayant un pH de 1 à 6, le liquide de traitement changeant le pH de la composition d'encre aqueuse en provoquant ainsi l'agrégation des particules colorées insolubles dans l'eau (A) et des particules insolubles dans l'eau (B) de manière qu'une image se forme sur un support d'enregistrement,
dans lequel les particules insolubles dans l'eau (B) sont obtenues par polymérisation en émulsion utilisant des monomères et un émulsionnant carboxylate en une quantité de 1 à 50 % en masse, par rapport à la masse de tous les monomères utilisés en tant que composants constitutifs du polymère insoluble dans l'eau, et le liquide de traitement est différent de la composition d'encre aqueuse, et l'émulsionnant carboxylate est un savon de (suif-yl)ate, un savon d'acide gras dérivé de l'huile de coco, un savon de colophane, un savon d'acide gras purifié de stéarate ou d'oléate, un alcénylsuccinate ou un N-acylsarcosinate.

11. Système d'encre selon la revendication 10, dans lequel l'émulsionnant contenant un groupe carboxylate adhère à la surface du polymère insoluble dans l'eau.

12. Système d'encre selon la revendication 10 ou la revendication 11, dans lequel le liquide de traitement contient au moins un composé acide ayant un groupe acide phosphorique, un groupe acide phosphonique, un groupe acide phosphinique, un groupe acide sulfurique, un groupe acide sulfonique, un groupe acide sulfinique, ou un groupe carboxyle, ou un sel de celui-ci.

13. Système d'encre selon la revendication 10, dans lequel le régulateur de pH (C) est incorporé dans la composition d'encre aqueuse en une quantité telle que le pH de cette dernière soit de 7 à 10.
